# EUROPÄISCHE PATENTANMELDUNG

(11) **EP 3 109 031 A1**
(43) Veröffentlichungstag der Anmeldung: **28.12.2016**
(21) Anmeldenummer: 16176274.5
(22) Anmeldetag: 24.06.2016
(51) Int. Cl.: B29C 49/42, B29C 49/06

(54) **ADIABATE HOCHDRUCKERZEUGUNG**

(30) Priorität: 25.06.2015 DE 102015110204
(71) Anmelder: Krones AG, 93073 Neutraubling (DE)
(72) Erfinder: Knapp, Peter, 93073 Neutraubling (DE); Senn, Konrad, 93073 Neutraubling (DE); Huber, Manfred, 93073 Neutraubling (DE)
(74) Vertreter: Bittner, Bernhard

(57) **Zusammenfassung**

Die Erfindung betrifft eine Vorrichtung (1) zum Umformen von Kunststoffvorformlingen (10) zu Kunststoffbehältnissen (20) mit einer an einem Träger (2) angeordneten Vielzahl an Blasstationen (4) jeweils umfassend eine Blasform (42) zum Expandieren von Kunststoffvorformlingen (10) zu Kunststoffbehältnissen (20) innerhalb dieser Blasform (42) mittels eines unter Druck befindlichen pneumatischen Mediums, das der jeweiligen Blasstation (4) über eine Druckversorgungseinrichtung (6) bereitgestellt wird und das von der jeweiligen Blasstation (42) nach dem Expansionsvorgang über eine Druckabführeinrichtung (8) zumindest teilweise wieder abgeführt wird. Erfindungsgemäß weist sie eine Energieumwandlungseinrichtung (86) auf, mithilfe derer wenigstens ein Teil einer in einem Energiespeicher gespeicherten potentiellen Energie in eine Erhöhung der potentiellen Energie eines wenigstens einer Blasform (42) zugeordneten pneumatischen Mediums überführbar ist, wobei die Energieumwandlungseinrichtung (86) eine Energiezwischenspeichereinrichtung (66) aufweist und wenigstens ein Teil der aus dem Energiespeicher abgeführten potentiellen Energie und der von der Energieumwandlungseinrichtung (86) übertragenen Energie in der Energiezwischenspeichereinrichtung (66) in Form kinetischer Energie speicherbar ist.

## Beschreibung

Die vorliegende Erfindung betrifft eine Vorrichtung und ein Verfahren zum Umformen von Kunststoffvorformlingen zu Kunststoffbehältnissen mit einer an einem Träger angeordneten Vielzahl an Blasstationen, die jeweils eine Blasform zum Expandieren von Kunststoffvorformlingen zu Kunststoffbehältnissen innerhalb dieser Blasform mittels eines unter Druck befindlichen pneumatischen Mediums umfassen, das der jeweiligen Blasstation über eine Druckversorgungseinrichtung bereitgestellt wird und das von der jeweiligen Blasstation nach dem Expansionsvorgang über eine Druckabführeinrichtung zumindest teilweise wieder abgeführt wird.

Derartige Vorrichtungen und Verfahren zum Expandieren von Behältnissen werden beispielsweise in der Herstellungsindustrie von Getränkebehältnissen verwendet.

Üblicherweise erfolgt das Ausprägen von Flaschen bzw. das Aufblasen eines Vorformlings zu einem Behältnis entsprechend einer gewünschten Ausgestaltung in einem Aufblas- bzw. Streckblasprozess. Hierzu wird ein entsprechender Vorformling in eine zumeist mindestens zweiteilige, verschließbare Blasform einer Blasstation eingebracht, welche in geschlossenem Zustand in deren Innerem eine Kavität ausbildet, deren Wandung der Außengestalt eines fertig-geblasenen Behältnisses entspricht. Die Expansion bzw. das Aufblasen des Vorformlings erfolgt im Stand der Technik typischerweise in mindestens zwei Stufen. In einer ersten Stufe wird der Vorformling zunächst mit Druckluft niedrigeren Drucks, der beispielsweise zwischen 6 und 25 bar liegen kann, "vorgeblasen", und anschließend in der sogenannten Hochdruckphase mit Druckluft eines Druckniveaus von 20 bis 40 bar beaufschlagt und dadurch fertiggeblasen. Dies erfordert daher die Erzeugung pneumatischen Mediums derart hoher Drücke. Im Stand der Technik wird dies mit mehrstufigen Kompressoren realisiert.

Der Expansionsvorgang des Vorformlings ist nur ein Behandlungsvorgang innerhalb seines Herstellungsprozesses. So können beispielsweise vor dem Expansionsvorgang weitere Behandlungsvorgänge wie Vorwärmen, Aufwärmen, Desinfizieren und Trocknen des Vorformlings von verschiedenen Behandlungseinrichtungen nacheinander vorgenommen werden. Im Stand der Technik sind die Blasstationen typischerweise auf einem drehbaren Träger angeordnet.

Es gibt bereits Ansätze, die Drucklufterzeugung direkt auf der Vorrichtung zur Umformung der Kunststoffvorformlinge zu Kunststoffbehältnissen zu realisieren, d.h. an dem drehbaren Träger anzuordnen. Die Offenlegungsschrift DE 10 2011 106 652 A1 beschreibt beispielsweise eine Vorrichtung, in der je Blasformeinheit eine Druckerzeugungseinheit vorgesehen ist, welche jeweils quasi adiabat Hochdruck für den Blasvorgang erzeugt. Dies ist aufgrund der Betriebsweise der Einheiten auch teilweise begründet, da bei jedem Behältnis jeweils der Druck erzeugt werden muss, um Toträume so klein wie möglich zu halten und so die Anlage energetisch am effizientesten zu betreiben.

Da die einzelnen Einheiten jedoch teilweise groß und schwer sind, sind sie nicht so einfach auf dem drehbaren Träger zu integrieren, was darüber hinaus zu enormen Kosten führt.

Es ist aber auch denkbar, dass die Formen an einem stehenden Träger verbaut sind. Bei dieser Ausführungsform steht nicht die Montagefreundlichkeit, sondern die Kosten der Vielzahl an Verdichtereinheiten, die mit der Erfindung eingespart werden können, im Vordergrund.

An derartige Umformungsvorrichtungen werden bei der Konstruktion hohe Anforderungen gestellt. Aus energetischer Sicht sollen sie möglichst effizient betreibbar sein. Hierzu zählen beispielsweise eine möglichst sparsame Erzeugung der Druckluft sowie ein bestmögliches Recyceln der nach dem abgeschlossenen Aufblasvorgang anfallenden Druckluft bzw. der Wiederverwertung der darin gespeicherten Energie. Gleichzeitig sollen die Umformungsvorrichtungen aber eine größtmögliche Variabilität hinsichtlich verschiedener herzustellender Behältnissorten, die für ihre Ausformung verschiedene Volumina an Druckluft erfordern, bieten.

Der vorliegenden Erfindung liegt daher die Aufgabe zugrunde, eine energetisch effiziente annähernd adiabate Hochdruckerzeugung für Vorrichtungen zum Umformen von Kunststoffvorformlingen zu Kunststoffbehältnissen bereitzustellen, die dem Benutzer zugleich eine ausreichende Anpassungsfähigkeit an verschiedene herzustellende Behältnissorten ermöglicht.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine an einem Träger angeordnete Vielzahl an Blasstationen auf, die jeweils eine Blasform zum Expandieren von Kunststoffvorformlingen zu Kunststoffbehältnissen innerhalb dieser Blasform mittels eines unter Druck befindlichen pneumatischen Mediums umfassen, das der jeweiligen Blasstation über eine Druckversorgungseinrichtung bereitgestellt wird und das von der jeweiligen Blasstation nach dem Expansionsvorgang über eine Druckabführeinrichtung zumindest teilweise wieder abgeführt wird.

Erfindungsgemäß weist die Vorrichtung eine Energieumwandlungseinrichtung auf, mithilfe derer wenigstens ein Teil einer in einem Energiespeicher gespeicherten potentiellen Energie in eine Erhöhung der potentiellen Energie eines wenigstens einer, bevorzugt genau einer, Blasform zugeordneten pneumatischen Mediums überführbar ist.

Weiterhin weist die Energieumwandlungseinrichtung erfindungsgemäß eine Energiezwischenspeichereinrichtung auf, in der wenigstens ein Teil der aus dem Energiespeicher abgeführten potentiellen Energie und insbesondere der von der Energieumwandlungseinrichtung übertragenen Energie in Form kinetischer Energie speicherbar ist.

In einer bevorzugten Ausführungsform ist die Energieumwandlungseinrichtung dazu geeignet und bestimmt, wenigstens einen Teil der in dem Energiespeicher gespeicherten potentiellen Energie abzuführen und zumindest zeitweise einen Anteil dieser abgeführten Energie in der Energiezwischenspeichereinrichtung in Form kinetischer Energie zu speichern und zeitgleich dazu einen weiteren Anteil der abgeführten Energie (direkt) überzuführen in eine Erhöhung der potentiellen Energie des wenigstens einer, bevorzugt genau einer, Blasform zugeordneten pneumatischen Mediums.

In einer bevorzugten Ausführungsform ist die Energieumwandlungseinrichtung weiterhin dazu geeignet und bestimmt, wenigstens einen Teil einer potentiellen Energie, die bei der Dekompression eines einer Blasform zugeordneten pneumatischen Mediums frei wird, abzuführen und zumindest zeitweise einen Anteil dieser abgeführten Energie in eine Erhöhung der potentiellen Energie des Energiespeichers überzuführen und bevorzugt zeitgleich dazu einen weiteren Anteil der abgeführten Energie in der Energiezwischenspeichereinrichtung in Form kinetischer Energie zu speichern.

Durch die erfindungsgemäße Vorrichtung erzielt die Anmelderin eine Anpassung der Energieabgabe an den zeitlichen Kraftverlauf, der bei einer Kompression eines pneumatischen Mediums aufgebracht werden muss. Dabei wird ausgenutzt, dass bei der Kompression eines pneumatischen Mediums die aufzubringende Kraft (mit dem Verdichtungsweg) zunimmt, während beispielsweise die bei der Dekompression eines pneumatischen Mediums freigesetzte Kraft mit dem Expansionsweg abnimmt. Wird nun beispielsweise diese Dekompression mit Kompression über einen gemeinsamen Kolben gekoppelt, so dass sie zeitgleich ablaufen, erhält man zu Beginn des Kompressions- bzw. Dekompressionsvorgangs einen Kraftüberschuss seitens der Expansion. Ähnlich verhält es sich bei einer Kopplung des Verdichtungskolbens mit einem Federelement. Auch hier wird bei einer Entlastung der anfänglich gespannten Feder eine größere Kraft freigesetzt, als durch die Kompression um den entsprechenden Weg erforderlich wäre.

Daher ist es bevorzugt nötig, die Energie, die am Anfang der Verdichtung beim Kraftüberschuss der Vorspannung frei wird, so zwischen zu speichern, dass diese beim Ende des Verdichtungsvorgangs wieder genutzt werden kann. Dies geschieht durch die Umwandlung potentieller Energie in kinetische Energie und umgekehrt.

Durch die erfindungsgemäße Vorrichtung wird daher vorgeschlagen, den Kraftüberschuss effizient zu nutzen und diesen in Form kinetischer Energie in der Energiezwischenspeichereinrichtung zu speichern.

Unter einer Druckversorgungseinrichtung bzw. unter einer Druckabführeinrichtung wird dabei eine Einrichtung verstanden, die dazu fähig ist, ein pneumatisches Medium von einer Einrichtung zu einer weiteren Einrichtung zu führen bzw. eine Fluidverbindung zwischen den beiden Einrichtungen herzustellen.

Unter einer Erhöhung der potentiellen Energie eines pneumatischen Mediums wird daher insbesondere eine Druckerhöhung und/oder eine Temperaturerhöhung dieses pneumatischen Mediums verstanden. Vorteilhaft erfolgt eine Druckerhöhung auf ein für die Hochdruckphase geeignetes Druckniveau, besonders vorteilhaft auf ein Druckniveau zwischen 20 bis 40 bar.

Vorteilhaft ist die in dem Energiespeicher gespeicherte potentielle Energie wenigstens teilweise, bevorzugt vollständig, eine aus einer (bevorzugt adiabatischen) Dekompression eines pneumatischen Mediums, welches für einen Umformvorgang in wenigstens einer, bevorzugt genau einer, Blasform verwendet worden ist, gewonnene Energie.

In diesem Sinne kann wenigstens einer ersten und bevorzugt genau einer ersten Blasform wenigstens eine weitere und bevorzugt genau eine weitere Blasform zugeordnet werden, der, ausgehend von der Reduzierung des Drucks des pneumatischen Mediums in ersterer Blasform, ein pneumatisches Medium mit erhöhtem Druck (d.h. mit höherem Druck als das vor der Zufuhr darin befindliche pneumatische Medium) zugeführt wird.

Die Reduzierung bzw. die Erhöhung des Drucks eines pneumatischen Mediums in einer Blasform bzw. einer Blasstation ist derart zu verstehen, dass gegebenenfalls der Druck eines pneumatischen Mediums in einem Kunststoffbehältnis (bzw. Kunststoffvorformling), welcher sich in dieser Blasform bzw. Blasstation befindet, reduziert bzw. erhöht wird.

In einer weiteren bevorzugten Ausführungsform weist die Energieumwandlungseinrichtung wenigstens einen Verdichtungszylinder auf. So kann der Kolben des Verdichtungszylinders als Energiewandler fungieren und aus dem Energiespeicher abgeführte potentielle Energie dazu verwendet werden, den Kolben anzutreiben und pneumatisches Medium in der Verdichtungskammer des Verdichtungszylinders zu komprimieren. Vorteilhaft ist die kolbenrückseitige Kammer und/oder die Verdichtungskammer des Verdichtungszylinders als Energiespeicher für potentielle Energie verwendbar.

Bevorzugt können hierzu in der Energieumwandlungseinrichtung Mittel zur Vorspannung eines Kolbens des Verdichtungszylinders, vorteilhaft als Energiespeicher für potentielle Energie, vorgesehen sein. Beispielsweise kann ein solches Mittel durch ein Federelement gegeben sein. Eine Vorspannung des Kolbens kann aber auch durch Beaufschlagung einer kolbenrückseitigen Druckkammer des Verdichtungszylinders, einer sogenannten Vorspannkammer, mit pneumatischem oder hydraulischem Medium umgesetzt werden.

Dabei kann im Falle eines Federelements die Energieabführung durch die Umwandlung von potentieller Energie aus der Federeinheit in kinetische Energie in Antrieb und Schwungmasse und wieder zurück in potentielle Energie im Verdichtungszylinder (der Energieumwandlungseinrichtung) erfolgen (beim Entlasten entsprechend rückwärts).

Bevorzugt weist damit der Verdichtungszylinder eine Kammer zur Vorspannung auf und eine Kammer zur Erzeugung des Hochdrucks des pneumatischen Mediums. Die Vorspannung kann bevorzugt auch als Antrieb (Antriebseinrichtung) dienen, indem das Druckniveau bei Vor- und Rückhub variiert wird. So kann beispielsweise der Druck beim Vorhub konstant auf 16 bar liegen, und beispielsweise beim Rückhub lediglich bei 13 bar. Da die Energie bei einem Kraft-Weg-Diagramm der Fläche unter dem Graphen entspricht, zeigt sich, dass man energetisch das System mit einer niedrigeren Vorspannkraft als der maximalen Kraft des Verdichtungszylinders betreiben kann. Statisch ist dies jedoch nicht möglich. Daher ist es bevorzugt nötig, die Energie, die am Anfang der Verdichtung beim Kraftüberschuss der Vorspannung frei wird, so zwischen zu speichern, dass diese beim Ende des Verdichtungsvorgangs wieder genutzt werden kann. Dies geschieht durch die Umwandlung potentieller Energie in kinematische Energie und umgekehrt.

In einer weiteren bevorzugten Ausführungsform ist das innerhalb einer Blasstation in einem Expansionsvorgang verwendete und wenigstens teilweise einer Druckkammer eines Verdichtungszylinders zugeführte pneumatische Medium in der Energieumwandlungseinrichtung als Energiespeicher an potentieller Energie verwendbar. Dazu kann nach Abschluss eines Expansionsvorgangs in einer Blasstation das darin befindliche unter Druck stehende pneumatische Medium über die Druckabführeinrichtung der Druckkammer des Verdichtungszylinders der Energieumwandlungseinrichtung zugeführt werden, bzw. eine Fluidverbindung zwischen der Blasstation und der Druckkammer hergestellt werden. Durch die potentielle Energie dieses pneumatischen Mediums kann der Kolben des Verdichtungszylinders angetrieben werden und hierdurch potentielle Energie abgeführt und transferiert werden.

In einer bevorzugten Ausführungsform weist die Energiezwischenspeichereinrichtung als kinematisches Zwischenspeichermittel eine schwenkbare bzw. eine drehbare Masse auf. Dabei kann es sich bei der schwenkbaren bzw. drehbaren Masse nicht nur um einen Feststoff sondern auch um ein Fluid, insbesondere eine hydraulische Flüssigkeit, handeln.

In einer weiteren vorteilhaften Ausführungsform ist das kinematische Zwischenspeichermittel ein Schwungrad. Damit kann in der Energiezwischenspeichereinrichtung dadurch Energie in Form kinetischer Energie zwischengespeichert werden, dass das Schwungrad in Rotation versetzt bzw. ausgelenkt wird, besonders bevorzugt durch einen Kurbeltrieb. Die in der Zwischenspeichereinrichtung, in diesem Falle in dem Schwungrad, zwischengespeicherte Energie kann, bevorzugt gegen Ende eines Übertragungsvorgangs von Energie aus dem Energiespeicher auf eine Erhöhung der potentiellen Energie eines wenigstens einer Blasform zugeordneten pneumatischen Mediums hin ebenfalls auf das pneumatische Medium übertragen werden und somit zu einer weiteren Erhöhung der potentiellen Energie des pneumatischen Mediums führen.

Da die (aus dem potentiellen Energiespeicher abgeführte) Energiemenge enorm groß ist und gleichzeitig die Kolbengeschwindigkeit begrenzt ist, kann die kinetische Energie bevorzugt durch eine Übersetzung oder durch eine sehr hohe Masse zwischengespeichert werden. Ein Kurbeltrieb ist hier eine besonders vorteilhafte Lösung, da zum einen die Bewegung in Rotation übersetzt wird, kann die Trägheitsmasse deutlich reduziert werden und durch die unendliche Übersetzung im Totpunkt kann mit geringer Kraft der Kolben in seiner Endlage gehalten werden.

Vorteilhaft können durch eine Kopplung eines Verdichtungszylinders an einen Kurbeltrieb günstige Hebelverhältnisse in den Endlagen des Verdichtungszylinderkolbens erreicht werden. Hierdurch ist in den Endlagen (nahezu) keine Haltekraft notwendig. Ferner handelt es sich bei dieser Umsetzung um einfache Mechanik.

Im Falle einer Vorspannung, wie obig beschrieben, erweist sich als Vorteil, dass lediglich geringe Leistungsspitzen erhalten werden. Weitere Vorteile stellen die Möglichkeit der Druckvariation und die Anpassung auf verschiedene Behältnisvolumen, sowie eine Reduzierung der trägen Masse dar.

Bevorzugt wird als kinematisches Zwischenspeichermittel hydraulisches Medium verwendet, besonders bevorzugt in Kombination mit einem Hydraulikzylinder, der vorteilhaft mit einem Verdichtungszylinder gekoppelt ist.

In einer weiteren vorteilhaften Ausführungsform ist in der Energiezwischenspeichereinrichtung wenigstens eine Energiemenge von 100 J, bevorzugt von wenigstens 500 J, bevorzugt von wenigstens 1 kJ und besonders bevorzugt von wenigstens 2 kJ der aus dem Energiespeicher abgeführten und insbesondere der von der Energieumwandlungseinrichtung übertragenen Energie zwischenspeicherbar.

Bevorzugt ist durch die Energieumwandlungseinrichtung eine Reduzierung des Drucks des pneumatischen Mediums innerhalb wenigstens einer und bevorzugt genau einer ersten Blasform mit der Erhöhung des Drucks eines pneumatischen Mediums, welches zur Einleitung in die mindestens eine und bevorzugt genau eine weitere Blasform zum Expandieren eines Kunststoffvorformlings zu einem Kunststoffbehältnis vorgesehen ist, koppelbar, besonders bevorzugt direkt koppelbar. Insbesondere ist bevorzugt kein Ringkanal vorgesehen, von dem aus die Blasformen (gemeinsam) mit pneumatischem Hochdruckmedium gespeist und damit besonders bevorzugt expandiert werden. Besonders bevorzugt wird das besagte pneumatische Medium, welches zur Einleitung in die mindestens eine bzw. genau eine weitere Blasform zum Expandieren des darin befindlichen Kunststoffvorformlings zu einem Kunststoffbehältnis vorgesehen ist, zeitgleich oder anschließend (bezüglich des Reduktionsvorgangs des Drucks in der mindestens einen ersten Blasform) direkt der mindestens einen bzw. genau einen weiteren Blasform zugeführt. An dieser Stelle wird unter direkt verstanden, dass dies ohne vorheriges Zuleiten (bzw. Durchleiten) beispielsweise in (bzw. durch) ein Reservoir für ein pneumatisches Medium unter Hochdruck erfolgt.

Bevorzugt ist diejenige Blasstation, in der sich das nächste aufzublasende Kunststoffbehältnis befindet, direkt mit dem Verdichtungszylinder der Energieumwandlungseinrichtung verbunden, der das für den Expansionsvorgang verwendete komprimierte pneumatische Medium erzeugt.

Vorteilhaft wird damit eine Vorrichtung vorgeschlagen, die derart ausgestaltet ist, dass mittels der Druckreduktion des pneumatischen Mediums innerhalb der wenigstens ersten bzw. der ersten Blasform (bevorzugt unter Verwendung eines zusätzlichen Antriebs) im Wesentlichen unmittelbar ein vorgegebenes Volumen eines pneumatischen Mediums derart komprimiert wird, dass das komprimierte Volumen (und damit der erzeugte Druck) dieses pneumatischen Mediums (genau) zur Umformung eines Kunststoffvorformlings zu einem Kunststoffbehältnis in der mindestens einen weiteren bzw. genau einen weiteren Blasform ausreicht. Bevorzugt handelt es sich bei der weiteren Blasform um eine Blasform, in der sich noch ein Preform in einem früheren Stadium bzw. in einer früheren Phase, bevorzugt in einer Vorblasphase, befindet.

In einer vorteilhaften Ausführungsform ist eine Reduzierung des Drucks des pneumatischen Mediums innerhalb wenigstens einer ersten Blasform mit der Erhöhung des Drucks des pneumatischen Mediums in wenigstens einer weiteren Blasform koppelbar. Auch hierbei kann eine derartige Kopplung zeitgleich aber auch zeitversetzt stattfinden.

Bevorzugt können auch jeweils zwei oder mehrere Blasformen miteinander in Fluidverbindung stehen bzw. ist eine Fluidverbindung herstellbar, so dass die potentielle Energie des diesen Blasformen zugeordneten pneumatischen Mediums als potentieller Energiespeicher der Energieumwandlungseinrichtung verwendbar ist. Bevorzugt führt dann die Energieumwandlungseinrichtung aus dem potentiellen Energiespeicher abgeführte Energie in eine Erhöhung der potentiellen Energie von pneumatischem Medium über, das ebenfalls zweien oder mehreren Blasformen zugeordnet ist. Besonders bevorzugt entspricht die Anzahl erster Blasformen genau der Anzahl letzterer Blasformen. Bevorzugt ist eine schwingungsfreie Kopplung der Druckreduktion des einen pneumatischen Mediums mit der Druckerhöhung des anderen pneumatischen Mediums vorgesehen.

Bevorzugt stehen die Druckversorgungseinrichtung und die Druckabführeinrichtung nicht miteinander in Fluidverbindung. Bevorzugt weist die Vorrichtung mehrere Druckversorgungseinrichtungen und auch mehrere Druckabführeinrichtungen, die besonders bevorzugt nicht miteinander in Fluidverbindung stehen, auf.

Bevorzugt weisen die Druckversorgungseinrichtung sowie die Druckabführeinrichtung jeweils mehrere Leitungen zum Leiten des pneumatischen Mediums auf. So könnten die beiden Einrichtungen jeweils etwa als Versorgungsstern ausgebildet sein. Bevorzugt sind Teile der Druckversorgungseinrichtung und der Druckentlastungseinrichtung, beispielsweise das Leitungssystem eines Versorgungssterns bis hin zu den Anschlüssen der Blasstationen, abhängig vom Zeitpunkt dieselben und mit Ventilen voneinander getrennt.

Bevorzugt ist der Träger als drehbarer Träger ausgebildet, insbesondere als sogenanntes Blasrad.

Bevorzugt weist jede der Blasstationen eine Beaufschlagungseinrichtung auf, welche vorteilhaft gegenüber der Blasform beweglich ist und an eine Mündung der Kunststoffvorformlinge bzw. der Kunststoffbehältnisse anlegbar ist. Bevorzugt kann eine derartige Beaufschlagungseinrichtung mit einer Druckversorgungseinrichtung und einer Druckabführeinrichtung fluidtechnisch verbindbar sein. Eine derartige Beaufschlagungseinrichtung könnte beispielsweise eine Blasdüse sein.

Bevorzugt weist jede der Blasstationen eine Reckstange zum Strecken der Kunststoffvorformlinge auf, d.h. ein stangenartiger Körper, der in die Kunststoffvorformlinge über deren Mündung einführbar ist.

Unter einer Vielzahl an Blasstationen sind dabei mindestens zwei Blasstationen, bevorzugt zwischen zwei und 100 Blasstationen, besonders bevorzugt zwischen 8 und 80, vorteilhaft zwischen 8 und 40, Blasstationen zu verstehen.

In einer weiteren vorteilhaften Ausführungsform erfolgt die Überführung (bzw. die Kopplung) der Reduzierung des pneumatischen Mediums innerhalb der wenigstens einen Blasform in die (bzw. mit der) Erhöhung des Drucks des pneumatischen Mediums in der wenigstens einen weiteren Blasform über eine Druckversorgungseinrichtung.

Bevorzugt ist eine Druckversorgungseinrichtung mit einer Druckabführeinrichtung über eine Energieumwandlungseinrichtung gekoppelt bzw. koppelbar. Vorteilhaft ist die Energieumwandlungseinrichtung dazu geeignet und/oder dazu vorgesehen, den Druck des in zumindest einem Abschnitt der Druckversorgungseinrichtung befindlichen pneumatischen Mediums zu erhöhen und (zeitgleich oder zeitversetzt) den Druck des zumindest in einem Abschnitt der Druckabführeinrichtung befindlichen pneumatischen Mediums zu reduzieren.Bevorzugt ist die Energieumwandlungseinrichtung ebenfalls auf dem Träger angeordnet (an dem auch die Vielzahl an Blasstationen angeordnet ist). Die Energieumwandlungseinrichtung kann aber auch an dem stationären Teil der Vorrichtung angeordnet sein.

Vorteilhaft handelt es sich um eine zentrale Energieumwandlungseinrichtung. Diese Energieumwandlungseinrichtung ist bevorzugt in der Lage mehrere Blasstationen (insbesondere nacheinander) zu bedienen. So können 2 - 8 Blasstationen mit einer Energieumwandlungseinrichtung betrieben werden. Bevorzugt ist daher genau eine Energieumwandlungseinrichtung als Druckerzeugungseinheit vorgesehen. Für sehr große Maschinen bzw. Umformungsvorrichtungen kann es notwendig sein, mehrere Energieumwandlungseinrichtungen auf der Maschine bzw. Umformungsvorrichtung unterzubringen. Bevorzugt sind daher zwischen einer und zehn Druckerzeugungseinheiten, besonders bevorzugt zwischen einer und drei und insbesondere bevorzugt zwei Druckerzeugungseinheiten (bzw. jeweils Energieumwandlungseinrichtungen) vorgesehen und vorteilhaft auch auf dem Träger oder besonders vorteilhaft an dem stationären Teil der Vorrichtung angeordnet.

Denkbar wäre allerdings auch eine dezentrale Hochdruckversorgung, in der jeder Blasstation eine eigene Energieumwandlungseinrichtung, beispielsweise gegeben durch einen Verdichtungszylinder und einen daran gekoppelten Kurbeltrieb, zugeordnet ist.

Bevorzugt können die der Energieumwandlungseinrichtung zugeordneten Blasstationen bzw. Blasformen bevorzugt einzeln an die Energieumwandlungseinrichtung gekoppelt werden. Bevorzugt kann daher eine Blasstation bzw. Blasform über die Druckabführeinrichtung und eine weitere Blasstation über die Druckversorgungseinrichtung an die Energieumwandlungseinrichtung gekoppelt sein.

Bevorzugt ist eine Blasform, nach Abschluss einer Hochdruckphase bzw. in welcher nach einem Expansionsvorgang pneumatisches Medium abzuführen ist, fluidtechnisch an eine Energieumwandlungseinrichtung koppelbar. Besonders bevorzugt ist diese Energieumwandlungseinrichtung an einem weiteren Anschluss an eine Blasform, in der sich ein zu expandierender Kunststoffvorformling befindet bzw. in der sich ein Kunststoffvorformling in einer Vorblasphase befindet, fluidtechnisch koppelbar.

Bevorzugt ist kein permanentes Hochdruckreservoir mehr erforderlich bzw. vorgesehen, welches das zum Umformen der Vorformlinge erforderliche Hochdruckmedium bereitstellt. Bevorzugt kann das für eine bestimmte Anzahl an Umformungsvorgänge erforderliche pneumatische Hochdruckmedium unmittelbar vor (oder sogar zeitgleich mit) einem Umformungsvorgang von der Energieumwandlungseinrichtung erzeugt werden. Besonders bevorzugt wird im Wesentlichen genau das Volumen erzeugt, das hierzu minimal benötigt wird.

Als vorteilhaft hat sich hierbei erwiesen, dass wegen der zentralen Versorgung weniger Hochdruckerzeugungseinrichtungen notwendig sind. Bis zu 16 Blasstationen können bevorzugt pro Energieumwandlungseinrichtung bedient werden.

Bevorzugt weist die Energieumwandlungseinrichtung eine Kammer und besonders bevorzugt zwei Kammern auf, von denen bevorzugt eine und vorteilhaft beide als temporäres pneumatisches Hochdruckreservoir genutzt werden kann bzw. können. Bevorzugt ist eine Strömungsverbindung zwischen einer Kammer und der Druckversorgungseinrichtung und/oder der Druckabführeinrichtung herstellbar. Bevorzugt ist eine Strömungsverbindung zwischen der anderen Kammer und der Druckversorgungseinrichtung und/oder der Druckabführeinrichtung herstellbar. Besonders bevorzugt ist das maximale Fassungsvermögen im Falle von zwei Kammern gleich groß.

In einer weiteren vorteilhaften Ausführungsform weist die Energieumwandlungseinrichtung zwei Verdichtungszylinder, insbesondere Pneumatikzylinder, auf, welche vorteilhaft miteinander gekoppelt sind. Besonders vorteilhaft ist die Energieumwandlungseinrichtung dazu fähig und geeignet, mehrere Blasstationen der Vorrichtung mit unter Druck befindlichem pneumatischen Medium zu versorgen.

In einer weiteren vorteilhaften Ausführungsform erfolgt die Kopplung der beiden Verdichtungszylinder zur Vorrichtung bzw. zum Träger bzw. zum Blasrad (jeweils) schwingungsfrei. Besonders vorteilhaft sind die beiden Verdichtungszylinder mechanisch gekoppelt.

Besonders bevorzugt wird damit die obig beschriebene Federeinheit (als Energiespeicher) durch einen zweiten Verdichtungszylinder ersetzt. Dabei werden vorteilhaft zwei Blasstationen, von denen eine bereits den Vorblasvorgang absolviert hat und die andere sich am Ende der Hochdruckphase befindet, gleichzeitig mit der Energieumwandlungseinrichtung (fluidtechnisch) verbunden und in diesen beiden Blasstationen wird gleichzeitig Druck auf- bzw. abgebaut. Da bei einem solchen Aufbau durch den Fertigblaszeitpunkt auch der Zeitpunkt des Druckabbaus festgelegt ist und dennoch der volle Prozesswinkel zur Kühlung der Flasche genutzt werden soll, wird die Flasche bevorzugt noch bis zum finalen Entlüften auf niedrigem Druckniveau gehalten.

Mit einer derartigen erfindungsgemäßen Vorrichtung ist im Vergleich zum Stand der Technik keine Erzeugung eines potentiellen Energiespeichers durch Vorspannung und dadurch keine Änderung desselben notwendig. Zudem sind, wie bereits erwähnt, wegen der zentralen Versorgung weniger Druckerzeugungs- bzw. Energieumwandlungseinheiten notwendig, da bevorzugt bis zu 16 Blasstationen pro Einheit bedient werden können.

In dieser Ausführungsform erfüllt die Energieumwandlungseinrichtung damit die Funktion einer Energiewippe. Dabei kann mit vergleichsweise wenig aufzubringender Energie die Komprimierung eines gegebenen pneumatischen Mediums erreicht werden, unterstützt bzw. angetrieben durch die bei der Druckreduktion freiwerdende Energie.

Bevorzugt sind die beiden Verdichtungszylinder, insbesondere die beiden Kolbenstangen der Verdichtungszylinder, über ein (bevorzugt antreibbares bzw. steuerbares) Schwungrad bzw. eine Schwungmasse (mechanisch) miteinander verbunden.

Bevorzugt sind die beiden Verdichtungszylinder über einen Hydraulikzylinder gekoppelt, besonders bevorzugt über einen Gleichlaufzylinder, der auf beiden Seiten der Kolbenfläche eine Kolbenstange aufweist. Besonders bevorzugt weist der Hydraulikzylinder dabei eine befüllbare Kammer zur Hubverstellung auf. Vorteilhaft lässt sich mittels des Hydraulikzylinders nicht nur eine Energiezwischenspeichereinrichtung, die Energie in Form kinetischer Energie in dem Hydraulikmedium speichert, sondern auch oder stattdessen ein hydraulischer Antrieb der beiden Verdichtungszylinder (bzw. Kolben hiervon) realisieren.

Alternativ hierzu ist es auch möglich, dass die Energieumwandlungseinrichtung lediglich einen Verdichtungszylinder aufweist, der allerdings zwei mit pneumatischem Medium befüllbare Kammern aufweist. Bevorzugt handelt es sich hierbei um einen Gleichlaufzylinder. Besonders bevorzugt ist auch hier eine Hubverstellung möglich, vorteilhaft über einen einstellbaren Abstand zweier Kolbenflächen. Diese zwei Kolbenflächen sind bevorzugt mechanisch miteinander (starr) verbunden. Bevorzugt weist eine derartige Energieumwandlungseinrichtung zudem zwei Hydraulikzylinder auf, die beide jeweils mit dem Verdichtungszylinder mechanisch gekoppelt sind. Dabei ist bevorzugt der eine Hydraulikzylinder mit dem Verdichtungszylinder verbunden und auf der anderen Seite des Verdichtungszylinder ist dieser mit dem zweiten Hydraulikzylinder mechanisch gekoppelt. Besonders bevorzugt kann mindestens einer vorteilhaft können beide Hydraulikzylinder für einen hydraulischen Antrieb des Verdichtungszylinders und oder als Teil der Energiezwischenspeichereinrichtung zum Speichern von kinematischer Energie in dem Hydraulikmedium genutzt werden. In einer weiteren vorteilhaften Ausführungsform weist die Vorrichtung eine Antriebseinrichtung zum Antreiben der Energieumwandlungseinrichtung auf. Eine derartige Antriebseinrichtung kann beispielsweise besagte Hydraulikzylinder antreiben. Insbesondere kann eine Antriebseinrichtung ein Elektromotor sein.

Bevorzugt kann durch besonders vorteilhafte Ausgestaltung der erfindungsgemäßen Vorrichtung mit einer Antriebseinrichtung, die eine konstante Ausgangsleistung aufweist, dennoch ein variables Hubvolumen an pneumatischem Hochdruckmedium erzeugt werden. Dies kann beispielsweise durch eine Hubverstellung durch veränderliches Kammervolumen von entweder wenigstens einem Verdichtungszylinder oder wenigstens einem Hydraulikzylinder erfolgen.

In einer weiteren vorteilhaften Ausführungsform kann eine Erhöhung der potentiellen Energie bzw. des Drucks des pneumatischen Mediums im Wesentlichen adiabatisch erfolgen.

In einer weiteren vorteilhaften Ausführungsform sind die Totraumvolumina aller Blasstationen gleich groß. Das Totraumvolumen beschreibt den Anteil an pneumatischem Hochdruckmedium, der nicht unmittelbar für den Umformungsvorgang genutzt wird. Bevorzugt weist die Druckversorgungseinrichtung und/oder die Druckabführeinrichtung eine radial-symmetrische Luftkanalanordnung auf. Besonders bevorzugt sind jeweils alle Fluidverbindungslängen zwischen der Energieumwandlungseinrichtung und den einzelnen Blasstationen gleich groß.

Bevorzugt kann an wenigstens einer, besonders bevorzugt an allen Blasstationen ein Totraumvolumen zugeschaltet werden. Wenn eine radial-symmetrische Luftkanalanordnung nicht möglich ist, wäre auch denkbar, den Weg bzw. die Fluidverbindungswege künstlich via (Leitungs-)Schleifen zu verlängern und so alle Fluidverbindungswege bzw. Leitungen gleich lang zu machen. Am besten wird dies so umgesetzt, dass die Druckverluste identisch sind. Dies eignet sich besonders bei kleinen Behältnissen, bei denen das Volumen somit künstlich vergrößert wird und so das Verdichtungsverhältnis konstant gehalten wird.

Alternativ oder zusätzlich kann eine Anpassung an verschiedene Behältnissorten bzw. Flaschengrößen über eine mechanische Veränderung des Hubs, beispielsweise durch Verwendung anderer Pleuel und Kurbelscheiben wie einer Hubverstellung über den Kurbeldurchmesser, erfolgen. Bevorzugt wird eine Hubverstellung realisiert durch die Einstellung eines veränderlichen Kammervolumens eines Verdichtungszylinders und/oder eines Hydraulikzylinders, wie obig beschrieben.

Alternativ oder zusätzlich kann eine Anpassung an ein anderes Behältnisvolumen durch eine unabhängige Einstellung des Vorblasdrucks in dem Behältnis und/oder in dem Verdichtungszylinder bzw. in wenigstens einer Blasstation und bevorzugt in allen Blasstationen erfolgen. Bevorzugt wird auch alternativ oder zusätzlich über eine Variation der Vorspannkraft (wenigstens eines Verdichtungszylinders und bevorzugt mehrerer Verdichtungszylinder) eine Anpassung an verschiedene Behältnissorten bzw. Flaschengrößen erzielt.

Bevorzugt ist eine Steuerungseinrichtung dazu vorgesehen und geeignet, die Energieumwandlungseinrichtung über die Druckversorgungseinrichtung bzw. über einen Verteilerstern mit einer Blasstation, bevorzugt durch die Steuerung von Ventilen, (fluidtechnisch) zu verbinden, innerhalb der sich ein Kunststoffvorformling befindet, der bereits vorgeblasen wurde. Dieses Behältnis wird mit Druck beaufschlagt (wobei das pneumatische Hochdruckmedium von der Energieumwandlungseinrichtung stammt) und die Energieumwandlungseinrichtung wird sodann durch die Steuerungseinrichtung wieder von dieser Blasstation entkoppelt. Anschließend verbindet die Steuerungseinrichtung nun die Energieumwandlungseinrichtung mit der Blasstation, die sich bereits am längsten in der Hochdruckphase befindet, und baut den Druck in dieser wieder ab. Bei mehreren zusätzlich vorhandenen Energieumwandlungseinrichtung verbindet die Steuerungseinrichtung nun obig genannte Energieumwandlungseinrichtung nicht mit der (relativ zum Transportweg bzw. Prozessschritt) direkt nachfolgenden Blasstation in der Vorblasphase zum Beaufschlagen mit pneumatischen Hochdruckmedium sondern mit der entsprechenden Blasstation, die sich zu diesem Zeitpunkt als letzte Blasstation vor den Hochdruckblasstationen befindet.

In einer weiteren bevorzugten Ausführungsform weist die Vorrichtung eine Steuerungseinrichtung zur Steuerung von Ventilen von bevorzugt der Druckversorgungseinrichtung und/oder der Druckabführeinrichtung und/oder der Energieumwandlungseinrichtung auf. Dabei ist die Steuerungseinrichtung bevorzugt dazu geeignet, eine erste Blasform, innerhalb welcher der Druck eines pneumatischen Mediums zu reduzieren ist, mit der Energieumwandlungseinrichtung fluidtechnisch zu verbinden. Bevorzugt ist die Steuerungseinrichtung zudem dazu geeignet, zeitgleich oder im Anschluss an eine fluidtechnische Verbindung der Energieumwandlungseinrichtung mit besagter ersten Blasform die Energieumwandlungseinrichtung fluidtechnisch mit einer weiteren Blasform zu verbinden, innerhalb derer der Druck eines pneumatischen Mediums zu erhöhen ist bzw. erhöht werden soll, bevorzugt um hierdurch einen Kunststoffvorformling hiermit zu beaufschlagen und besonders bevorzugt dadurch zu einem Kunststoffbehältnis aufzublasen.

Bevorzugt kann daher die Steuerungseinrichtung in Abhängigkeit der Anzahl an Blasstationen, die sich in der Hochdruckphase befinden, und in Abhängigkeit der Anzahl an Energieumwandlungseinrichtungen jeweils abwechselnd eine Blasstation mit der Energieumwandlungseinrichtung fluidtechnisch verbinden, die nach dem Vorblasen mit pneumatischen Hochdruckmedium versehen werden soll, und eine Blasstation, bei der nach Abschluss der Hochdruckphase das pneumatische Hochdruckmedium abgeführt werden kann.

Der Antrieb erfolgt bevorzugt durch Änderung des Vorspanndruckes, indem wie obig beschrieben beispielsweise das Druckniveau bei Vor- und Rückhub variiert wird. Dabei kann ein Antrieb vorteilhaft sowohl pneumatisch als auch hydraulisch erfolgen. Ein (zusätzlicher) elektrischer Antrieb an der Schwungmasse wird vorteilhaft nur zum Halten in den Endlagen benötigt, kann aber auch als unterstützender Antrieb oder als Hauptantrieb eingesetzt werden. Bevorzugt kann während der Hochdruck-Blasphase der Antrieb des Verdichtungskolbens sowohl elektromotorisch wie aus dem Energiespeicher des Druckluftpolsters erfolgen.

In einer weiteren vorteilhaften Ausführungsform kann zumindest zeitweise während der Reduktion des Drucks eines pneumatischen Mediums ein Teil einer bei einer Druckreduktion eines pneumatischen Mediums freiwerdenden Energie zur Druckerhöhung eines pneumatischen Mediums verwendet werden und ein weiterer Teil derselben zwischengespeichert werden. Bevorzugt erfolgt dies am Anfang des Verdichtungsvorgangs. Bevorzugt erfolgt eine (insbesondere automatische) zumindest zeitweise und zumindest teilweise Bereitstellung bzw. Abführung der zwischengespeicherten Energie gegen das Ende des Verdichtungsvorgangs.

Bevorzugt erfolgt das Zwischenspeichern von Energie in die kinetische Energie einer sehr großen Masse (wie beispielsweise einer Schwungmasse).

Nachteilig hat sich aus dem Stand der Technik erwiesen, dass bei festem Hub und fixer Kolbenfläche das Verdrängungsvolumen eines Verdichtungszylinders konstant ist. Da aber der Totraum zur Erhöhung des Energieverbrauchs beiträgt, sollte dieser möglichst klein sein. Bei kleinem Totraum und konstantem Verdrängungsvolumen ändert sich aber der Fertigblasdruck mit der Behältnisgröße (-volumen) und es ist schwierig eine effiziente Maschine auszulegen, die bevorzugt Behältnisse von 0.3 l bis 3 l blasen kann.

In einer weiteren vorteilhaften Ausführungsform weist daher die Verdichtungskolbenfläche des mindestens einen (bevorzugt aller) Verdichtungszylinders (bevorzugt zur adiabaten Hochdruckerzeugung) auf wenigstens einer Seite eine in ihrer Flächengröße veränderbare Wirkfläche auf. Bevorzugt handelt es sich dabei um die mit dem zu verdichtenden pneumatischen Medium gefüllte bzw. befüllbare Seite. Denkbar wäre zudem auch, dass beide Seiten der Kolbenfläche veränderbar (einstellbare) Wirkflächen aufweisen. Unter einer Wirkfläche wird dabei die Fläche der Kolbenfläche bezeichnet, die bei einer Verdichtung des Verdichtungszylinders tatsächlich auch zur Verdichtung beiträgt bzw. diese bewirkt. Alternativ hierzu wäre ebenfalls denkbar, dass mehrere Kolben verwendet werden.

Bevorzugt kann eine Veränderung einer Wirkfläche bzw. ein mehrflächiger Kolben dadurch erreicht werden, dass verschiedene Bereiche der Kolbenfläche (Kolbenteilflächen) auf einer Seite des Zylinders (bevorzugt auf der Seite, auf der die Verdichtung des pneumatischen Mediums erfolgt) mit der Innenwandung des Zylinders (Zylindergehäuses) separate, d.h. fluidtechnisch voneinander getrennte, Teilkammern ausbilden. In diese Teilkammern kann damit einzeln bzw. unabhängig voneinander ein Fluidmedium eingebracht und verdichtet werden. Es ist aber auch möglich, dass lediglich eine oder nur ein Teil der Teilkammern während eines Verdichtungsvorgangs des Verdichtungszylinders mit einem Fluidmedium versehen ist. Die übrigen Teilkammern sind dann bevorzugt atmosphärisch belüftet. Daher können in einer bevorzugten Ausführungsform die den jeweiligen Kolbenflächen entsprechenden Teilkammern unabhängig voneinander (atmosphärisch) belüftet werden. Zudem ist es bevorzugt möglich, dass mehrere Teilkammern miteinander fluidtechnisch verbunden werden können. Damit ergeben sich in vorteilhafter Weise selbst aus einer kleinen Anzahl an separaten Teilkammern durch die verschiedenen Kombinationen eine Vielzahl von Verschaltungsmöglichkeiten.

Es handelt sich bevorzugt um einen Verdichtungszylinder zur adiabaten Hochdruckerzeugung. Vorteilhaft zeichnet sich dabei der Kolben des Zylinders durch das Vorhandensein mehrerer, gleichzeitig wirkenden, unterschiedlich oder gleich großer Kolbenflächen aus. Diese können je nach vorhandener Behältnisgröße auf unterschiedliche Weise verschaltet werden. Dadurch kann erreicht werden, dass bei gleichem Kolbenhub verschiedene große Volumen mit ausreichendem Druck versorgt werden können. Werden beispielsweise bei kleinen Behältnissen Kolbenflächen nicht genutzt, so sind diese atmosphärisch belüftet und bauen keinen Druck auf. Bei einem Kolben mit beispielsweise zwei Kolbenflächen gibt es so drei verschiedene Verschaltungsmöglichkeiten (Fläche 1 oder Fläche 2 oder Fläche 1 + Fläche 2). Weiter besteht bevorzugt die Möglichkeit, eine Kolbenrückseite mit Druck vorzuspannen, sodass ein Speicher von potentieller Energie geschaffen wird.

Vorteile einer derartigen Ausgestaltung sind, dass hiermit eine energetisch optimierte Hochdruckerzeugung ermöglicht wird. Mit Hilfe der Verschaltung der Kolbenflächen können verschiedene Luftvolumen (bzw. Volumen von pneumatischem Medium) bei gleichem Kolbenhub erzeugt werden und somit kann zum Antrieb des Systems eine Antriebseinrichtung benutzt werden, die nicht variabel in ihrem Hub ist.

In einer weiteren vorteilhaften Ausführungsform weist die Verdichtungskolbenfläche des Verdichtungskolbens des mindestens einen (bevorzugt aller) Verdichtungszylinders wenigstens eine beaufschlagbare Ringfläche und/oder wenigstens eine beaufschlagbare Kreisfläche auf.

Bevorzugt weist eine Kolbenfläche (auf wenigstens einer Seite) (wenigstens) zwei, besonders bevorzugt wenigstens drei und insbesondere bevorzugt vier Kolbenteilflächen auf, welchen jeweils eine separat mit Fluidmedium beschickbare Teilkammer zugeordnet ist.

Bevorzugt ist mindestens eine Kolbenteilfläche als Kreisringfläche, besonders bevorzugt sind zwei Kolbenteilflächen als Kreisringflächen ausgebildet. Vorteilhaft ist mindestens eine, besonders bevorzugt genau eine, Kolbenteilfläche als Kreisfläche ausgebildet. Bevorzugt befindet sich bezüglich einer Achse, die mittig durch die Kolbenstange parallel zu ihrer Bewegungsrichtung führt, die kreisflächenförmige Kolbenteilfläche direkt an dieser Achse und die eine (oder mehreren) kreisringflächenförmigen Kolbenflächen sind hinsichtlich dieser Achse weiter außen beabstandet angeordnet.

Ferner ist möglich, dass das Zylindergehäuse bzw. die Zylinderummantelung, die auch in Verbindung mit der Kolbenfläche die einzelnen Teilkammern voneinander abgrenzt, derart ausgestaltet ist, dass sie einen konvex ausgeformten Abschnitt aufweist. Dieser kann beispielsweise die Gestalt eines Stempels aufweisen und in den Kolben hineinragen bzw. eingreifen.

Bevorzugt kann auch der Kolben auf seiner Verdichtungsseite (auf der sich nicht seine Kolbenstange befindet) eine ringförmige Ausprägung aufweisen, die einen kleineren Durchmesser als der Innendurchmesser des Zylinders aufweist.

Die vorliegende Erfindung ist zusätzlich oder alternativ zu obig genannten kennzeichnenden Merkmalen auf eine Vorrichtung zum Umformen von Kunststoffvorformlingen zu Kunststoffbehältnissen gerichtet, die eine an einem Träger angeordnete Vielzahl an Blasstationen aufweist, die jeweils eine Blasform zum Expandieren von Kunststoffvorformlingen zu Kunststoffbehältnissen innerhalb dieser Blasform mittels eines unter Druck befindlichen pneumatischen Mediums umfassen, das der jeweiligen Blasstation über eine Druckversorgungseinrichtung bereitgestellt wird und das von der jeweiligen Blasstation nach dem Expansionsvorgang über eine Druckabführeinrichtung zumindest teilweise wieder abgeführt wird, wobei die Vorrichtung wenigstens einen Verdichtungszylinder aufweist, dessen Verdichtungskolben eine Verdichtungskolbenfläche auf wenigstens einer Seite eine in ihrer Flächengröße veränderbare Wirkfläche aufweist.

Dabei kann auch diese Vorrichtung mit wenigstens einem, mit mehreren oder allen bereits obig beschriebenen Merkmalen ausgestattet sein. Die Anmelderin behält sich vor, auch diese Erfindung im Rahmen einer Teilanmeldung zu beanspruchen.

Die vorliegende Erfindung ist weiterhin auf ein Verfahren zum Umformen von Kunststoffvorformlingen zu Kunststoffbehältnissen innerhalb einer Blasform mittels eines unter Druck befindlichen pneumatischen Mediums gerichtet. Dabei wird ein Kunststoffvorformling innerhalb wenigstens einer ersten Blasform einer Blasstation mit unter Druck befindlichem pneumatischen Medium beaufschlagt, welches über eine Druckversorgungseinrichtung bereitgestellt wird, und zu einem Kunststoffbehältnis expandiert. Nach dem Expansionsvorgang wird über eine Druckabführeinrichtung zumindest teilweise das pneumatische Medium von der Blasform abgeführt.

Erfindungsgemäß wird wenigstens ein Teil einer in einem Energiespeicher gespeicherten potentiellen Energie aus diesem abgeführt und von einer Energieumwandlungseinrichtung in eine Erhöhung der potentiellen Energie eines wenigstens einer, bevorzugt genau einer, (weiteren) Blasstation zugeordneten pneumatischen Mediums übergeführt. Dabei wird wenigstens ein Teil der von der Energieumwandlungseinrichtung übertragenen Energie in einer Energiezwischenspeichereinrichtung in Form kinetischer Energie zwischengespeichert und mit dem resultierenden pneumatischen Medium mit erhöhter potentieller Energie wird bevorzugt wenigstens ein, bevorzugt genau ein, in einer Blasform der wenigstens einen, bevorzugt genau einen, weiteren Blasstation befindlicher Kunststoffvorformling zu einem Kunststoffbehältnis expandiert.

Bevorzugt wird durch die Energieumwandlungseinrichtung potentielle Energie aus einem Energiespeicher abgeführt, indem pneumatisches Mediums, welches sich nach einem Expansionsvorgang in einer Blasstation befindet, expandiert wird,

Alternativ oder zusätzlich ist es auch möglich, dass in der Energieumwandlungseinrichtung als Energiespeicher für potentielle Energie Mittel zur Vorspannung eines Kolbens eines Verdichtungszylinders vorgesehen sind und hieraus Energie abgeführt wird.

Bevorzugt wird ein Anteil der abgeführten Energie in kinetische Energie umgewandelt und in der Energiezwischenspeichereinrichtung gespeichert und zeitgleich ein anderer Anteil, bevorzugt der andere Teil, der abgeführten Energie für die Erhöhung der potentiellen Energie des pneumatischen Mediums verwendet.

Bevorzugt kann der in der Energiezwischenspeichereinrichtung gespeicherte Energieanteil, besonders bevorzugt gegen Ende eines solchen Umwandlungsvorganges, ebenfalls in eine Erhöhung der potentiellen Energie des pneumatischen Mediums verwendet werden.

Bevorzugt kann dieser Vorgang auch umgekehrt ablaufen, das heißt, dass dann ein Teil der potentiellen Energie eines pneumatischen Mediums in kinetische Energie in der Energiezwischenspeichereinrichtung und ein weiterer Teil in eine Erhöhung der potentiellen Energie des Energiespeichers übergeführt wird.

Bevorzugt wird eine Druckreduktion in eine Druckerhöhung eines vorgegebenen Volumen an einem weiteren pneumatischen Medium vorgegebenen (niedrigeren) Drucks, wie beispielweise dem Vorblasdruck, übergeführt, wobei das hierdurch erreichte Volumen an pneumatischen Hochdruckmedium für wenigstens, bevorzugt für genau, einen weiteren Expansionsvorgang eines weiteren Kunststoffvorformlings zu einem Kunststoffbehältnis (genau) ausreichend ist.

Bevorzugt wird eine Reduzierung des Drucks des pneumatischen Mediums innerhalb wenigstens einer ersten Blasform mit der Erhöhung des Drucks eines pneumatischen Mediums, bevorzugt direkt und besonders bevorzugt zeitgleich, vorteilhaft allerdings zeitversetzt, gekoppelt. Bevorzugt wird das pneumatische Medium, dessen Druck erhöht wurde, einem Kunststoffvorformling zugeführt und besonders bevorzugt dieser zu einem Kunststoffbehältnis expandiert.

Bevorzugt wird Energie der Energiespeichereinrichtung dazu verwendet, um den Druck eines pneumatischen Mediums zu erhöhen, welches besonders bevorzugt anschließend dazu verwendet wird, einen Kunststoffvorformling hiermit zu beaufschlagen und/oder diesen zu expandieren. Bevorzugt wird die Energie umgewandelt in eine in die kinematische Energie einer Schwungmasse. Bevorzugt kann die Energieumwandlungseinrichtung und/oder besagte Schwungmasse über eine Antriebseinrichtung angetrieben werden.

Bevorzugt kann eine Steuerungseinrichtung in Abhängigkeit der Phase bzw. des Zustands mindestens einer Blasform, bevorzugt in Abhängigkeit der Phasen bzw. der Zustände mindestens zweier Blasformen, eine Auswahl treffen, ob eine Energie, welche bei der Reduzierung des Drucks des pneumatischen Mediums innerhalb wenigstens einer ersten Blasform abgeführt wird, in einer Energiespeichereinrichtung zwischengespeichert werden soll oder ob zeitgleich zur Abführung der Energie diese dazu verwendet werden soll, um den Druck eines (weiteren) pneumatischen Mediums zu erhöhen.

Hierbei ist bevorzugt unter einer Phase bzw. eines Zustandes einer Blasform die Phase bzw. der Zustand eines Kunststoffvorformlings oder eines Kunststoffbehältnisses, welcher oder welches sich in dieser Blasform befindet, zu verstehen. Eine derartige Phase bzw. ein derartiger Zustand kann beispielsweise eine Vorblasphase, eine Hochdruckphase, eine Niederdruckphase bzw. der Beginn bzw. ein (erfolgreicher) Abschluss dieser sein.

Bevorzugt kann auch eine Fluidverbindung zwischen jeweils zwei oder bevorzugt mehreren Blasformen untereinander hergestellt werden, so dass dann eine Reduzierung des Drucks des pneumatischen Mediums innerhalb dieser beiden oder bevorzugt mehreren ersten Blasformen in eine Erhöhung des Drucks des pneumatischen Mediums innerhalb der beiden oder mehreren weiteren Blasformen übergeführt werden kann.

Besonders bevorzugt erfolgt die direkte Kopplung eines Kompressions- und eines Dekompressionsvorgangs von pneumatischen Medium über zwei mechanisch gekoppelte Verdichtungszylinder der Energieumwandlungseinrichtung.

Bevorzugt kann der Hub von wenigstens einem Verdichtungszylinder der Energieumwandlungseinrichtung verstellt werden. Besonders bevorzugt erfolgt dies über das Verändern eines Kammervolumens.

Bevorzugt erfolgt eine Erhöhung des Drucks des pneumatischen Mediums im Wesentlichen adiabatisch. Bevorzugt ist das Totraumvolumen wenigstens einer, bevorzugt aller, Blasstationen, besonders bevorzugt durch Zuschalten eines zusätzlichen Totraumvolumens, veränderbar.

Auch dieses Verfahren kann dabei mit allen bereits obig beschriebenen Merkmalen ausgestattet sein.

Bei der PET-Flaschenherstellung wird während des Flaschenentstehungsprozesses ein bestimmter Druckablauf in einer entstehenden Flasche durchlaufen. Es wird hierbei versucht, die einzelnen unterschiedlichen Drücke möglichst schnell in der Flasche aufzubauen. Dabei ist es wichtig, den Fertigblasdruck möglichst schnell und lange in der Flasche anstehen zu lassen, da sich in dieser Phase die Qualität der Flasche maßgeblich erzielen lässt. Nach der Fertigblasdruckphase wird die Luft aus der Flasche wieder ausgelassen und teilweise über Recyclingsysteme wiederverwendet. Auch dieser Ablauf sollte so schnell wie möglich von statten gehen, da auch er den Fertigblaswinkel und somit die Dauer der Fertigblasdruckphase beeinflusst. Zum Schluss wird noch eine Menge Luft über einen Schalldämpfer aus der Flasche geführt, die momentan, wenn überhaupt, nur selten und aufwendig wiederverwertet werden kann.

Die vorliegende Erfindung ist zusätzlich oder alternativ zu obig genannten kennzeichnenden Merkmalen auf eine Vorrichtung zum Umformen von Kunststoffvorformlingen zu Kunststoffbehältnissen gerichtet, die eine an einem Träger angeordnete Vielzahl an Blasstationen aufweist, die jeweils eine Blasform zum Expandieren von Kunststoffvorformlingen zu Kunststoffbehältnissen innerhalb dieser Blasform mittels eines unter Druck befindlichen pneumatischen Mediums umfassen, das der jeweiligen Blasstation über eine Druckversorgungseinrichtung bereitgestellt wird, und das von der jeweiligen Blasstation nach dem Expansionsvorgang über eine Druckabführeinrichtung zumindest teilweise wieder abgeführt wird,
wobei die Vorrichtung wenigstens einen, bevorzugt genau einen, Verdichtungszylinder aufweist, mithilfe dessen wenigstens ein Teil des ihm, bevorzugt von der Druckabführeinrichtung, zugeführten pneumatischen Mediums über mindestens eine Zwischenstufe, in der das zugeführte pneumatische Medium bereits ein erstes Mal auf ein Zwischendruckniveau komprimiert wurde, zu einem pneumatischen Hochdruckmedium komprimiert werden kann.

Dabei kann auch diese Vorrichtung mit wenigstens einem, mit mehreren oder allen bereits obig beschriebenen Merkmalen ausgestattet sein. Die Anmelderin behält sich vor, auch diese Erfindung im Rahmen einer Teilanmeldung zu beanspruchen.

Alternativ oder zusätzlich weist die Vorrichtung wenigstens einen, bevorzugt genau einen, Verdichtungszylinder auf, der mindestens vier, bevorzugt genau vier, verschieden große Kolbenflächen aufweist.

Denkbar ist auch, dass über die Druckabführeinrichtung zumindest einen Teil des nach einem Expansionsvorgang in einer Blasstation befindlichen pneumatischen Mediums in ein Zwischendruckreservoir von reduziertem Druck (beispielsweise in einem Bereich zwischen 5 und 20 bar) abgeführt wird. Davon ausgehend, kann dann dem Verdichtungszylinder entweder pneumatisches Medium aus dem Zwischendruckreservoir und/oder pneumatisches Medium aus einer Blasstation zur Kompression zugeführt werden.

Der Verdichtungszylinder komprimiert bevorzugt wenigstens einen Teil des ihm von der Druckabführeinrichtung zugeführten pneumatischen Mediums mindestens zweimal. Bevorzugt findet daher eine mehrstufige, besonders bevorzugt eine zweistufige oder vorteilhaft eine dreistufige Kompression des pneumatischen Mediums statt. Eine derartige Drucktransformation über mehrere (im Wesentlichen möglichst adiabat ablaufende) Stufen erlaubt dabei eine noch bessere Annäherung an eine ideal adiabatisch ablaufende Kompression eines pneumatischen Mediums.

Es wird zwar eine Realisierung der mehrstufigen Kompression bzw. das Erzielen eines Hochdruckniveaus über mindestens ein oder bevorzugt mehrere Zwischendruckniveaus mittels eines einzigen Verdichtungszylinders beschrieben, allerdings ist grundsätzlich auch eine Umsetzung über mehrere, beispielsweise über zwei, Verdichtungszylinder denkbar.

Bevorzugt ist der Verdichtungszylinder ebenfalls auf dem Träger angeordnet, besonders bevorzugt handelt es sich um einen Pneumatikzylinder.

Bevorzugt weist der Verdichtungszylinder mindestens vier, bevorzugt genau vier, besonders bevorzugt sechs oder vorteilhaft acht Kammern auf. Vorteilhaft weisen dabei mindestens drei, bevorzugt vier und besonders bevorzugt alle Kolbenflächen verschiedene Flächengrößen auf.

Bevorzugt sind dabei die Kolbenflächen aller Kammern durch (genau) eine Kolbenstange mechanisch verbunden. Bevorzugt ist wenigstens eine Kolbenfläche, besonders bevorzugt sind alle Kolbenflächen als Ringflächen ausgestaltet. Bevorzugt ist die Kolbenstange antreibbar, besonders bevorzugt durch einen Elektromotor.

Bevorzugt reduziert sich bei einem Kolbenrückhub das Volumen der Hälfte der Kammern, während sich das Volumen der anderen Kammern vergrößert. Umgekehrtes gilt bevorzugt bei einem Kolbenvorhub.

Dem Verdichtungszylinder ist in eine erste Kammer zu komprimierendes pneumatisches Medium zuführbar. Bevorzugt weist diese Kammer die größte Kolbenfläche auf. Vorteilhaft ist diese erste Kammer mit einer zweiten Kammer sowohl fluidtechnisch verbindbar als auch separierbar, wobei diese Fluidverbindung, vorteilhaft in Abhängigkeit von der Kolbenposition oder besonders vorteilhaft in Abhängigkeit von der Bewegungsrichtung der Kolbenstange, verbindbar oder schließbar bzw. hergestellt oder geschlossen sein kann. Bevorzugt weist diese zweite Kammer eine kleinere Kolbenfläche als diejenige der ersten Kammer auf. Dabei kann diese Kolbenfläche auf einen Bereich zwischen 10% und 90%, bevorzugt zwischen 10% und 75% und besonders bevorzugt zwischen 10% und 50%, der Kolbenfläche der ersten Kammer reduziert sein.

Bevorzugt ist die zweite Kammer des Verdichtungszylinders in eine Fluidverbindung mit einer dritten Kammer des Verdichtungszylinders bringbar, wobei eine derartige Fluidverbindung ebenfalls vorteilhaft in Abhängigkeit von der Kolbenposition oder besonders vorteilhaft in Abhängigkeit von der Bewegungsrichtung der Kolbenstange, verbindbar oder schließbar bzw. hergestellt oder geschlossen sein kann. Zudem ist in dieser Fluidverbindung vorteilhaft ein Rückschlagventil vorgesehen. Bevorzugt ist die Kolbenfläche in der dritten Kammer kleiner ausgebildet als die der ersten Kammer und besonders bevorzugt gleich groß oder vorteilhaft kleiner als die der zweiten Kammer.

Bevorzugt ist die dritte Kammer des Verdichtungszylinders in eine Fluidverbindung mit einer vierten Kammer des Verdichtungszylinders bringbar, wobei eine derartige Fluidverbindung ebenfalls vorteilhaft in Abhängigkeit von der Kolbenposition oder besonders vorteilhaft in Abhängigkeit von der Bewegungsrichtung der Kolbenstange, verbindbar oder schließbar bzw. hergestellt oder geschlossen sein kann. Bevorzugt weist die Kolbenfläche der vierten Kammer eine kleinere Fläche auf als die der ersten Kammer, bevorzugt als die der zweiten Kammer und besonders bevorzugt als die der dritten Kammer. Vorteilhaft ist also die Kolbenfläche der vierten Kammer am kleinsten ausgeführt. Bevorzugt ist ebenfalls das maximale Kammervolumen der vierten Kammer am geringsten. Besonders bevorzugt ist das maximale Kammervolumen der ersten Kammer am größten.

Bevorzugt weist die vierte Kammer eine Abnahmestelle auf, von der aus das darin befindliche pneumatische Medium abgeführt werden kann. Besonders bevorzugt wird ein Rückfluss pneumatischen Mediums (über die Abnahmestelle) in die vierte Kammer hinein über ein Ventil, insbesondere ein Rückschlagventil verhindert. Denkbar wäre auch, dass einer dritten Kammer beispielsweise nicht nur pneumatisches Medium von der zweiten Kammer zugeführt werden kann, sondern dass ihr auch zusätzliches pneumatisches Medium (beispielsweise mittleren Druckniveaus) zugeführt werden könnte.

Bevorzugt ist eine Fluidverbindung zwischen zwei in einem Verdichtungszylinder benachbart angeordneten Kammern durch den Kolben (bzw. die Kolbenstange) geführt.

Im Falle von vier Kammern erhöht sich bei einem Kolbenrückhub bevorzugt das Volumen der ersten und der dritten Kammer, während sich das Volumen der anderen beiden Kammern, also der zweiten und vierten Kammer, reduziert. Umgekehrt wird bevorzugt bei einem Kolbenvorhub das Volumen der ersten und dritten Kammer reduziert, während das Volumen der zweiten und vierten Kammer erhöht wird.

Bevorzugt ist der Verdichtungszylinder mit einem Hochdruckreservoir verbunden, dem bevorzugt durch den Verdichtungszylinder erzeugtes komprimiertes pneumatisches Medium zugeführt werden kann.

Bevorzugt ist bei einem Kolbenrückhub des Verdichtungszylinders die Fluidverbindung zwischen der ersten Kammer und der zweiten Kammer sowie zwischen der dritten Kammer und der vierten Kammer geschlossen. Besonders bevorzugt ist bei einem Kolbenvorhub des Verdichtungszylinders die Fluidverbindung zwischen der ersten Kammer und der zweiten Kammer sowie zwischen der dritten Kammer und der vierten Kammer hergestellt. Vorteilhaft ist eine Zufuhr pneumatischen Mediums in die erste Kammer des Verdichtungszylinders nur während eines Kolbenrückhubs möglich.

Bevorzugt besteht in einer ersten Stufe in einem Arbeitsbetrieb des Verdichtungszylinders eine Fluidverbindung zwischen der ersten Kammer des Verdichtungszylinders und einer Zufuhr pneumatischen Mediums wie beispielsweise der Druckabführeinrichtung. Bevorzugt bewegt sich in einem ersten Schritt der ersten Stufe der Kolben zunächst zurück, wodurch sich das erste Kammervolumen vergrößert und über die Zufuhr pneumatisches Medium in die erste Kammer strömt. Dabei sind Fluidverbindungen zwischen der ersten Kammer und der zweiten Kammer geschlossen. Am Ende des ersten Schritts der ersten Stufe wird die Zufuhr beendet bzw. geschlossen.

Zu Beginn des zweiten Schritts der ersten Stufe wird eine Fluidverbindung zwischen der ersten Kammer und der zweiten Kammer (und besonders bevorzugt auch zwischen der dritten Kammer und der vierten Kammer) hergestellt. Der zweite Schritt der ersten Stufe ist durch den Kolbenvorhub gegeben. Am Ende des zweiten Schritts der ersten Stufe wird die Fluidverbindung zwischen der ersten Kammer und der zweiten Kammer (besonders bevorzugt ebenso zwischen der dritten und der vierten Kammer) getrennt.

Zu Beginn des ersten Schritts der zweiten Stufe wird eine Fluidverbindung zwischen der zweiten Kammer und der dritten Kammer hergestellt. Der erste Schritt der zweiten Stufe ist schließlich durch einen Kolbenrückhub gegeben. Dadurch wird bevorzugt das in der zweiten Kammer befindliche pneumatische Medium in die dritte Kammer gedrängt. Am Ende des ersten Schritts der zweiten Stufe wird die Fluidverbindung zwischen der zweiten und der dritten Kammer getrennt.

Zu Beginn des zweiten Schritts der zweiten Stufe wird eine Fluidverbindung zwischen der dritten und vierten Kammer hergestellt. Der zweite Schritt der zweiten Stufe ist durch einen Kolbenvorhub gegeben. Am Ende dieses Schritts wird die Fluidverbindung zwischen der dritten und vierten Kammer wieder getrennt.

In einem letzten Schritt kann nun in der vierten Kammer befindliches pneumatisches Medium hieraus abgeführt werden.

Dabei ergibt sich, dass sich der eben beschriebene Ablauf auf ein bestimmtes Volumen zugeführtes pneumatisches Medium bezieht, welches hierdurch zunächst in der zweiten Kammer auf ein Zwischendruckniveau komprimiert und letztlich in der vierten Kammer auf ein Enddruckniveau komprimiert wird.

Bei einem Kolbenvorhub bzw. einem Kolbenrückhub können auch die genannten beiden Stufen gleichzeitig ablaufen, jeweils bezogen dann auf pneumatisches Medium, welches in aufeinanderfolgenden Schritten zugeführt wurde.

Die vorliegende Erfindung ist zusätzlich oder alternativ auf ein Verfahren gemäß dem Oberbegriff von Anspruch 15 gerichtet. Nach dem Expansionsvorgang wird zumindest ein Teil des in der Blasform befindlichen pneumatischen Mediums über ein mehrstufiges, bevorzugt über ein zweistufiges, Kompressionsverfahren, bevorzugt im Wesentlichen adiabat, komprimiert. Bevorzugt wird das resultierende komprimierte pneumatische Medium erneut zur Beaufschlagung eines Kunststoffvorformlings verwendet. Es ist allerdings auch möglich, dass es vor dieser Verwendung zunächst einem Reservoir zum Speichern von pneumatischem Medium diesen Drucks zugeführt wird.

Dabei kann auch dieses Verfahren mit wenigstens einem, mit mehreren oder allen bereits obig beschriebenen Merkmalen ausgestattet sein. Die Anmelderin behält sich vor, auch diese Erfindung im Rahmen einer Teilanmeldung zu beanspruchen.

Besonders bevorzugt handelt es sich dabei um ein zweistufiges und vorteilhaft um ein dreistufiges Kompressionsverfahren.

Die vorliegende Erfindung ist weiterhin auf ein Verfahren zur Wiederverwertung eines zur Umformung verwendeten pneumatischen Mediums in einer Vorrichtung zum Umformen von Kunststoffvorformlingen zu Kunststoffbehältnissen innerhalb einer Blasform mittels eines unter Druck befindlichen pneumatischen Mediums gerichtet. Dabei wird ein Kunststoffvorformling innerhalb wenigstens einer ersten Blasform einer Blasstation mit unter Druck befindlichem pneumatischen Medium beaufschlagt, welches über eine Druckversorgungseinrichtung bereitgestellt wird, und zu einem Kunststoffbehältnis expandiert. Dabei wird zumindest ein Teil des, bevorzugt nach einem Expansionsvorgang eines Kunststoffvorformlings zu einem Kunststoffbehältnis, in der Blasform befindlichen Mediums auf ein niedrigeres erstes Druckniveau entspannt und dieses zumindest teilweise auf ein höheres zweites Druckniveau komprimiert. Das resultierende komprimierte pneumatische Medium wird bevorzugt für einen Behandlungsvorgang eines weiteren Kunststoffvorformlings oder Kunststoffbehältnisses verwendet. Bevorzugt kann wenigstens ein Teil des in der Blasform nach einem Expansionsvorgang eines Kunststoffvorformlings zu einem Kunststoffbehältnis befindlichen pneumatischen Mediums einem Zwischendruckreservoir zugeführt werden. Bevorzugt kann ein Teil des komprimierten pneumatischen Mediums und/oder des für den Behandlungsvorgang verwendeten pneumatischen Mediums von einem Zwischendruckreservoir bereitgestellt worden sein.

Dabei kann auch dieses Verfahren mit wenigstens einem, mit mehreren oder allen bereits obig beschriebenen Merkmalen ausgestattet sein. Die Anmelderin behält sich vor, auch diese Erfindung im Rahmen einer Teilanmeldung zu beanspruchen.

In einer ersten bevorzugten Variante ist das Verfahren auf die Wiederverwertung eines zur Umformung verwendeten pneumatischen Mediums in einer Vorrichtung zum Umformen von Kunststoffvorformlingen zu Kunststoffbehältnissen innerhalb einer Blasform mittels eines unter Druck befindlichen pneumatischen Mediums gerichtet. Dabei wird ein Kunststoffvorformling innerhalb wenigstens einer ersten Blasform einer Blasstation mit unter Druck befindlichem pneumatischen Medium beaufschlagt, welches über eine Druckversorgungseinrichtung bereitgestellt wird, und zu einem Kunststoffbehältnis expandiert.

Nach dem Expansionsvorgang wird in einem ersten Schritt zumindest ein Teil des in der Blasform befindlichen Mediums zunächst auf ein erstes Druckniveau entspannt. Eine solche Entspannung wird bevorzugt durch die Herstellung einer Fluidverbindung zwischen der Blasform und einer, bevorzugt leeren, Kammer (vorgegebenen Volumens), beispielsweise einem Drucktank, erreicht. Dabei wird unter "leer" das Vorliegen atmosphärischer Verhältnisse, insbesondere also einen Druck von im Wesentlichen 1 bar verstanden.

Nach Beendigung der Entspannung wird die Fluidverbindung zwischen der Blasform und der Kammer getrennt.

Anschließend wird in einem zweiten Schritt das in der Kammer befindliche pneumatische Medium bis zum Erreichen eines zweiten Druckniveaus komprimiert.

Bevorzugt erfolgt diese Kompression mithilfe eines Kompressors bzw. Verdichtungszylinders, wobei dieser besonders vorteilhaft auf dem Träger angeordnet ist. Besonders bevorzugt handelt es sich bei der Kammer, in der das in der Blasform befindliche Medium entspannt wird, um eine Verdichtungskammer des Kompressors bzw. des Verdichtungszylinders.

Anschließend wird in einem dritten Schritt das auf das zweite Druckniveau komprimierte pneumatische Medium entweder einem Hochdruckreservoir zugespeist und/oder einer weiteren Blasform, wobei es sich bevorzugt um eine "leere" Blasform handelt, bevorzugt zur Beaufschlagung eines Kunststoffvorformlings mit diesem, zugeführt.

Wird das auf das zweite Druckniveau komprimierte pneumatische Medium in eine weitere Blasform, bzw. das darin befindliche Behältnis, umgeleitet, so wird bevorzugt in einem vierten Schritt zusätzliches unter Druck befindliches pneumatisches Medium zugeführt. Besonders bevorzugt ergänzt das Volumen des zusätzlich zugeführten pneumatischen Mediums das zugeführte Volumen des auf das zweite Druckniveau komprimierten pneumatischen Mediums derart, dass das Gesamtvolumen für einen vorgesehenen Behandlungsschritt ausreichend ist. Diese zusätzliche Zufuhr an pneumatischem Medium ist vorteilhaft, um etwaige Druckverluste bzw. Verluste pneumatischen Mediums ausgleichen zu können.

Ein Behandlungsschritt kann dabei beispielsweise ein Vorblasen eines Kunststoffvorformlings oder ein Umformvorgang eines Kunststoffvorformlings zu einem Kunststoffbehältnis sein. Vorteilhaft entspricht das zweite Druckniveau dem Druck des zusätzlich zugeführten pneumatischen Mediums. Bevorzugt wird das zusätzliche unter Druck befindliche pneumatische Medium durch einen Hochdruckkompressor bzw. einen Verdichtungszylinder erzeugt. Dabei ist dieser Hochdruckkompressor vorteilhaft nicht auf dem Träger angeordnet sondern es handelt sich bevorzugt um einen externen Hochdruckkompressor. Besonders bevorzugt ist der Hochdruckkompressor bzw. Verdichtungszylinder allerdings schon auf dem Träger angeordnet.

Bevorzugt liegt das erste Druckniveau in einem Bereich zwischen 2 und 10 bar, besonders bevorzugt in einem Bereich zwischen 3 und 8 bar und vorteilhaft zwischen 4 und 6 bar. Bevorzugt liegt das zweite Druckniveau in einem Bereich zwischen 20 und 50 bar, bevorzugt zwischen 20 und 40 bar und besonders bevorzugt zwischen 30 und 40 bar. Bevorzugt entspricht das zweite Druckniveau dem Druck, der zur Expansion eines Kunststoffvorformlings zu einem Kunststoffbehältnis oder alternativ zum Vorblasen eines Kunststoffvorformlings verwendet wird.

In einer bevorzugten zweiten Ausführungsform des Verfahrens zur Wiederverwertung eines zur Umformung verwendeten pneumatischen Mediums wird anstelle des vierten Schritts der ersten Ausführungsform zwischen dem ersten Schritt (Entspannen) und dem zweiten Schritt (Komprimieren der Kammer), in der sich bereits das aus der Entspannung gewonnene pneumatische Medium bei einem ersten Druckniveau befindet, zusätzliches pneumatisches Medium, bevorzugt größeren oder besonders bevorzugt gleichen Druckniveaus, zugeführt. Besonders bevorzugt ist das Volumen (bzw. die Stoffmenge) an zugeführtem zusätzlichen pneumatischen Medium derart gewählt, dass unter Berücksichtigung dessen Drucks und vorteilhaft auch unter Berücksichtigung der Stoffmenge (beispielsweise aus Volumen, Druck) des aus der Entspannung gewonnenen und bereits in der Kammer befindlichen pneumatischen Mediums, das nach Kompression des Gesamtvolumens an pneumatischen Medium auf ein zweites Druckniveau erhaltene komprimierte Gesamtvolumen an pneumatischen Medium für einen Behandlungsschritt eines Kunststoffvorformlings ausreichend ist. Bevorzugt wird der Druck des zugeführten pneumatischen Mediums mittels eines Niederdruckkompressors erzeugt. Dabei kann es sich sowohl vorteilhaft um einen externen Niederdruckkompressor handeln, der nicht auf dem Träger angeordnet ist, oder aber bevorzugt um einen, der auf dem Träger angeordnet ist.

In einer bevorzugten dritten Ausführungsform eines Verfahrens zur Wiederverwertung eines zur Umformung verwendeten pneumatischen Mediums wird vor dem ersten Schritt, d.h. bevor eine Fluidverbindung zwischen der Blasform und der Kammer zur Entspannung zumindest eines Teils des in der Blasform befindlichen pneumatischen Mediums hergestellt wird, zunächst eine Fluidverbindung zwischen der Blasform und einem Zwischendruckreservoir hergestellt. Bevorzugt herrscht in dem Zwischendruckreservoir ein Druck zwischen 5 und 40 bar, besonders bevorzugt zwischen 5 und 20 bar, vorteilhaft zwischen 12 und 18 bar. Bevorzugt ist der in dem Zwischendruckreservoir herrschende Druck insbesondere kleiner als derjenige des pneumatischen Mediums, das zum Umformen von Kunststoffvorformlingen eingesetzt wird bzw. derjenige Druck des pneumatischen Mediums, der unmittelbar nach Abschluss eines Umformvorgangs eines Kunststoffvorformlings zu einem Kunststoffbehältnis in diesem herrscht.

Im Anschluss laufen die Schritte der ersten Ausführungsform zur Wiederverwertung eines zur Umformung verwendeten pneumatischen Mediums ab.

In einer weiteren bevorzugten Variante dieser dritten Variante handelt es sich bei der weiteren Blasform (bzw. Behältnis oder Vorformling), welcher in dem dritten Schritt des Verfahrens das auf das zweite Druckniveau komprimierte pneumatische Medium zugeführt wird, nicht um eine "leere" Blasform (bzw. Behältnis oder Vorformling), sondern diese Blasform (bzw. Behältnis oder Vorformling) wurde bereits vorab mit pneumatischem Medium beaufschlagt. Bevorzugt wurde diese weitere Blasform mit pneumatischem Medium aus dem Zwischendruckreservoir bereits vorab beaufschlagt. Besonders bevorzugt herrscht somit in dieser weiteren Blasform ein Druck zwischen 5 und 40 bar, besonders bevorzugt zwischen 5 und 20 bar, vorteilhaft zwischen 12 und 18 bar, bevor ihm das auf das zweite Druckniveau komprimierte pneumatische Medium zugeführt wird. Besonders bevorzugt wird sodann die Stoffmenge (bzw. das Volumen) des unter Druck befindlichen pneumatischen Mediums, welches der weiteren Blasform zusätzlich zugeführt wird, entsprechend angepasst. Verglichen mit einer "leeren" Blasform muss entsprechend weniger Stoffmenge bzw. ein kleineres Volumen an zusätzlichem pneumatischen Medium zugeführt werden.

In einer bevorzugten vierten Ausführungsform eines Verfahrens zur Wiederverwertung eines zur Umformung verwendeten pneumatischen Mediums werden die im Rahmen der zweiten Ausführungsform des Verfahrens beschriebenen Abwandlungen in die dritte Ausführungsform des Verfahrens integriert.

Mit diesen Verfahren kann Luft, sprich "Abfallluft", bevorzugt aus einer Blassform und vorteilhaft mit einem Druck bzw. Flascheninnendruck kleiner 15 bar, zu Hochdruck recycelt werden. Man kann aber auch komplett ohne Zwischendruckreservoir auskommen. Dafür nimmt man bevorzugt die "komplette Abfallluft" wieder aus der Flasche und komprimiert sie neu.

Somit könnte bevorzugt ein externer Kompressor für Hochdruckluft entfallen. Man würde bei allen Varianten dieses Verfahrens weniger Luft verschwenden.

Weitere Vorteile und Ausführungsformen ergeben sich aus den beigefügten Zeichnungen. Darin zeigen:
- Fig. 1: Eine schematisch dargestellte bevorzugte Ausführungsform einer erfindungsgemäßen Vorrichtung zum Umformen von Kunststoffvorformlingen zu Kunststoffbehältnissen in der Draufsicht sowie zwei Blasstationen in Querschnittsdarstellung;
- Fig. 2: ein Kraft-Kolbenpositionsdiagramm für eine in einem Verdichtungszylinder ablaufende Kompression und Dekompression;
- Fig. 3a - d: vier schematische Querschnittsdarstellungen einer Energieumwandlungseinrichtung weiterer bevorzugter Ausführungsformen einer erfindungsgemäßen Vorrichtung;
- Fig. 4: eine schematische Darstellung einer weiteren bevorzugten Ausführungsform einer erfindungsgemäßen Vorrichtung in Draufsicht sowie in Querschnittsdarstellung;
- Fig. 5: eine Gegenüberstellung der Prozesswinkel der Behandlungsvorgänge zweier Flaschen bei ihrem Umformprozess;
- Fig. 6: eine schematische Darstellung der in Fig. 1 dargestellten Ausführungsform einer erfindungsgemäßen Vorrichtung unter Kennzeichnung der einzelnen Phasen, in der sich die Kunststoffbehältnisse in ihrem Umformungsvorgang befinden;
- Fig. 7: eine schematische Querschnittsdarstellung eines Verdichtungszylinders einer weiteren bevorzugten Ausführungsform einer erfindungsgemäßen Vorrichtung;
- Fig. 8: eine schematische Querschnittsdarstellung eines mit einem Kurbeltrieb gekoppelten Verdichtungszylinders;
- Fig. 9: ein qualitatives Diagramm zur Veranschaulichung der Kolbenkraft in Abhängigkeit von der Kolbenposition bei einer mechanischen Kopplung eines Verdichtungszylinders mit einem Kurbeltrieb;
- Fig. 10: eine schematische Querschnittsdarstellung eines Verdichtungszylinders einer weiteren bevorzugten Ausführungsform einer erfindungsgemäßen Vorrichtung;
- Fig. 11 - 14: Veranschaulichungen bevorzugter Ausführungsformen eines Verfahrens zur Wiederverwertung eines zur Umformung verwendeten pneumatischen Mediums.

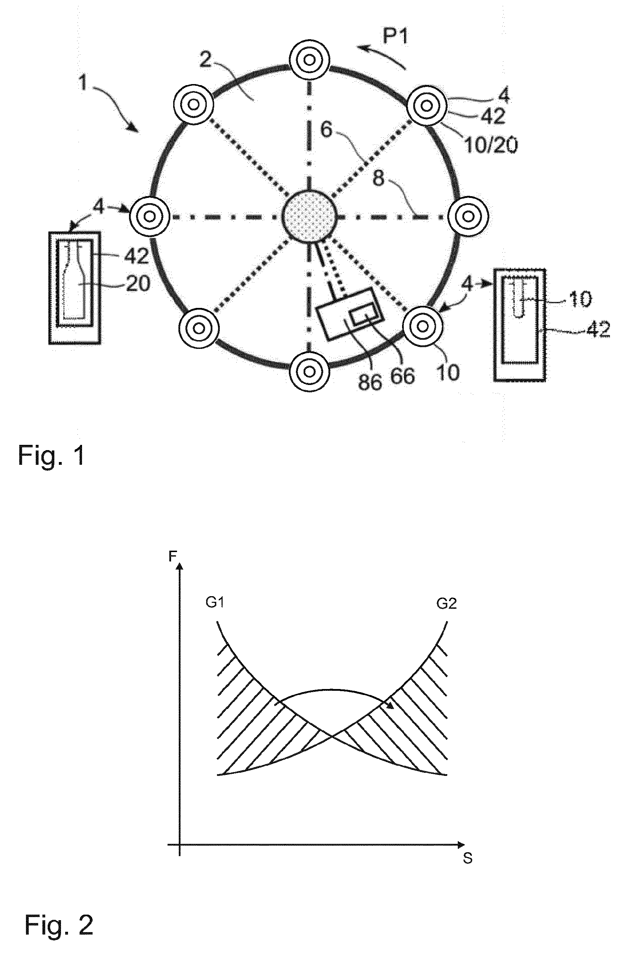

Fig. 1 zeigt eine schematische Darstellung einer bevorzugten Ausführungsform einer erfindungsgemäßen Vorrichtung zum Umformen von Kunststoffvorformlingen zu Kunststoffbehältnissen in der Draufsicht sowie zwei Blasstationen in Querschnittsdarstellung. Dabei ist eine an einem Träger 2 angeordnete Vielzahl an Blasstationen 4 vorgesehen. Jede Blasstation 4 weist eine Blasform 42 auf, innerhalb derer ein Kunststoffvorformling 10 durch Beaufschlagung mit einem unter Druck befindlichen pneumatischen Medium zu einem Kunststoffbehältnis 20 expandiert werden kann. Bei dem Träger 2 kann es sich bevorzugt um einen (bevorzugt um eine vertikale Achse) drehbaren Träger handeln. Darüber hinaus weist die Vorrichtung wenigstens eine Druckversorgungseinrichtung 6 bzw. wenigstens eine Druckabführeinrichtung 8 auf, über die das pneumatische Medium den einzelnen Blasstationen 4 bereitgestellt bzw. von den einzelnen Blasstationen 4 abgeführt werden kann. Dabei stehen die Druckabführeinrichtung 8 und die Druckversorgungseinrichtung 6 bevorzugt nicht miteinander in Fluidverbindung. Bevorzugt handelt es sich bei der Druckversorgungseinrichtung und der Druckabführeinrichtung um Leitungen.

In der Fig. 1 werden ebenfalls zwei Blasstationen 4 in Querschnittsdarstellung schematisch dargestellt. Hierdurch wird der Ablauf eines Umformungsvorgangs angedeutet. So befindet sich in der auf der rechten Seite der Fig. 1 dargestellten Blasstation 4 noch ein Kunststoffvorformling 10 innerhalb der Blasform 42. Dieser Kunststoffvorformling 10 wird durch das Einleiten von pneumatischem Hochdruckmedium zu einem fertig ausgeformten Kunststoffbehältnis 20 aufgeblasen. Das hierzu erforderliche pneumatische Hochdruckmedium wird der Blasstation 4 über die Druckversorgungseinrichtung 6 bereitgestellt. Im Laufe des Expansionsvorgangs des Kunststoffvorformlings 10 zu einem fertig ausgeformten Kunststoffbehältnis 20 dreht sich in der dargestellten Ausführungsform der Träger gegen den Uhrzeigersinn weiter, so dass sich nach Beendigung des Expansionsvorgangs die Blasstation 4 nunmehr an der Stelle der Blasstation 4 befinden kann, neben der die zweite Querschnittsdarstellung einer Blasstation 4 gezeigt wird (in der linken Figurenseite). In deren Blasform 42 befindet sich sodann kein Kunststoffvorformling 10 mehr, sondern bereits das fertig aufgeblasene Kunststoffbehältnis 20.

Das in dem fertig aufgeblasenen Kunststoffbehältnis 20 befindliche pneumatische Medium, das auch nach dem Expansionsvorgang immer noch einen hohen Druck aufweist, kann nun über die Druckabführeinrichtung zumindest teilweise abgeführt und als Energiespeicher für potentielle Energie genutzt werden. Hierzu kann die Blasstation 4 über die Druckabführeinrichtung 8 mit der Energieumwandlungseinrichtung 86 verbunden werden. Die Energieumwandlungseinrichtung 86 ist dazu vorgesehen bzw. dazu geeignet, aus dem potentiellen Energiespeicher abgeführte Energie überzuführen in eine Erhöhung eines Drucks eines pneumatischen Mediums, mit welchem entweder gleichzeitig oder im Anschluss daran ein Kunststoffvorformling 10 in einer weiteren Blasstation 4 zu einem Kunststoffbehältnis 20 expandiert wird. Dabei kann sie einen temporären Energieüberschuss an abgeführter Energie in eine Energiezwischenspeichereinrichtung 66 in Form kinetischer Energie zwischenspeichern und diese zu einem späteren Zeitpunkt ebenfalls dem Verdichtungsvorgang zuführen.

In Fig. 2 wird anhand eines qualitativen Diagramms die an einem Kolben eines Verdichtungszylinders auftretende bzw. aufzubringende Kraft F in Abhängigkeit von der Kolbenposition s bei einer Expansion, gekennzeichnet durch das Bezugszeichen G1, und bei einer Kompression eines pneumatischen Mediums dargestellt, gekennzeichnet durch das Bezugszeichen G2. Während eines Expansionsvorgangs fällt die freiwerdende Kraft mit steigendem Volumen ab. Ein umgekehrtes Verhalten zeigt sich bei einem Kompressionsvorgang, bei dem mit dem Verdichtungsweg die aufzubringende Kraft zunimmt. Bei einer Kopplung eines Verdichtungs- und eines Kompressionsvorgangs erhält man daher anfänglich einen Kraftüberschuss seitens der in der Kompression freiwerdenden Kraft. Die erfindungsgemäße Vorrichtung 1 ist nun geeignet, die mit diesem Kraftüberschuss einhergehende und bei einer "einfachen" Kopplung anfallende ungenutzte Energie, die in Fig. 2 als schraffierte Fläche markiert ist, in der Energiezwischenspeichereinrichtung 66 zwischenzuspeichern und am Ende des Verdichtungsvorgangs diese wieder zu nutzen und von der Energiezwischenspeichereinrichtung 66 dem Verdichtungskolben zuzuführen.

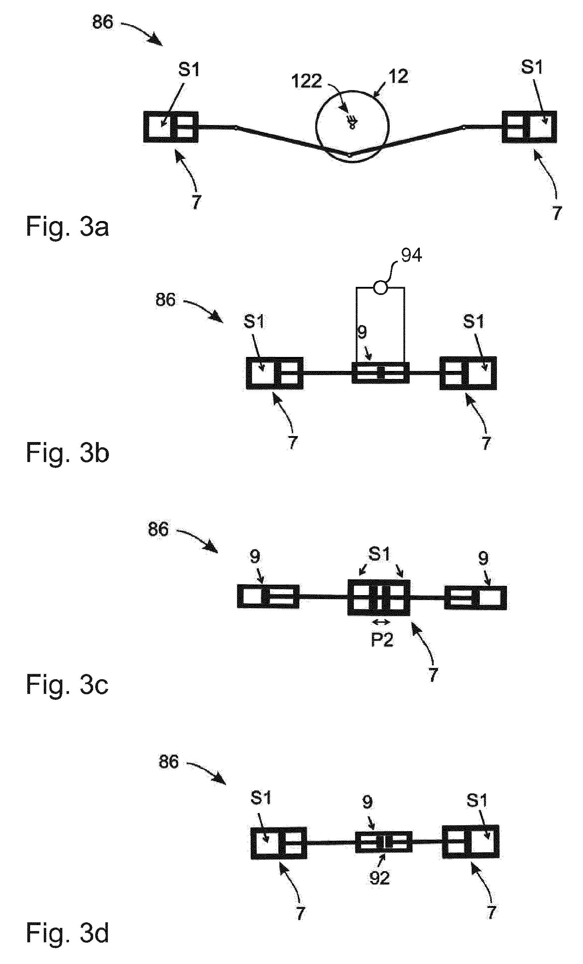

Die Figuren 3a - d zeigen vier schematische Querschnittsdarstellungen einer Energieumwandlungseinrichtung 86 weiterer bevorzugter Ausführungsformen einer erfindungsgemäßen Vorrichtung 1. Bei der in Fig. 3a gezeigten Ausführungsform weist die Energieumwandlungseinrichtung 86 zwei Verdichtungszylinder 7 auf, die jeweils mechanisch über ihre Zylinderkolben an einen Kurbeltrieb gekoppelt sind. Als Energiezwischenspeichereinrichtung 66 ist hier eine Schwungmasse 12 vorgesehen, in der Energie in Form kinetischer Energie zwischenspeicherbar ist. Die Schwungmasse 12 kann über eine Antriebseinrichtung 122 angetrieben werden. Das Bezugszeichen S1 deutet jeweils bei den Verdichtungszylindern 7 die Verdichtungsseite an, also die Kammer des Verdichtungszylinders 7, in die bei dieser Ausführungsform der vorliegenden Erfindung pneumatisches Medium eingebracht und verdichtet wird. Dabei wird nicht auf beiden Verdichtungsseiten der beiden Verdichtungszylinder gleichzeitig verdichtet, sondern in einen Verdichtungszylinder wird pneumatisches Medium unter hohem Druck eingebracht, beispielsweise durch Herstellen einer Fluidverbindung mit einer Blasstation, in welcher gerade der Umformvorgang von einem Kunststoffvorformling 10 zu einem Kunststoffbehältnis 20 beendet wurde. Diese Verdichtungskammer bzw. dieses pneumatische Medium dient als Energiespeicher an potentielle Energie, woraus durch die Energieumwandlungseinrichtung 86 Energie durch eine Reduzierung des Drucks abgeführt werden kann. Die Kammer auf der Verdichtungsseite S1 des anderen Verdichtungszylinders ist ebenfalls mit pneumatischem Medium gefüllt, welches allerdings unter niedrigerem Druck steht. Die abgeführte Energie wird zum einen Teil zwischengespeichert in kinetische Energie der Schwungmasse 12 und zum anderen Teil direkt übergeführt in eine Erhöhung des Drucks des pneumatischen Mediums in dem anderen Verdichtungszylinder 7. Dabei kann die Kammer, in der der Druck des darin befindlichen pneumatischen Mediums erhöht wird, schon während der Erhöhung des Drucks oder aber auch direkt im Anschluss daran mit einer weiteren Blasstation bzw. deren Blasform, in welcher sich bevorzugt ein zu expandierender Kunststoffvorformling 10 befindet, fluidtechnisch verbunden sein oder werden.

Fig. 3b zeigt eine Energieumwandlungseinrichtung 86, in der verglichen zur Fig. 3a, die Kopplung der beiden Verdichtungszylinder 7 nicht über eine Schwungmasse 12 erfolgt, sondern über einen Hydraulikzylinder 9. Eine Energiezwischenspeicherung von kinetischer Energie kann ebenfalls, wie hier gezeigt, über die Speicherung von kinetischer Energie in hydraulischem Medium erfolgen. Zugleich kann ebenfalls über den Hydraulikzylinder 9 ein hydraulischer Antrieb 94 der Energieumwandlungseinrichtung 86 realisiert werden.

In der in Fig. 3c dargestellten Ausführungsform einer Energieumwandlungseinrichtung 86 ist lediglich ein Verdichtungszylinder vorgesehen. Dieser weist zwei Verdichtungsseiten S1 auf, wobei diese beiden Kammern durch einen einstellbaren Abstand voneinander beabstandet werden können (angedeutet durch Pfeil P2). Genauer weist der Verdichtungszylinder 7 zwei (über eine Kolbenstange) miteinander verbundene Kolben auf. Die Kolbenflächen dieser beiden Kolben können voneinander beabstandet werden, wie durch den Pfeil P2 illustriert wird. Durch diesen einstellbaren Abstand kann eine Hubverstellung realisiert werden. Bei einer Vergrößerung des Abstands zwischen den beiden Kolbenflächen wird damit das Gesamtvolumen der beiden Kammern (der Verdichtungsseiten S1) entsprechend kleiner. Die Energiezwischenspeichereinrichtung 86 kann hier über die beiden Hydraulikzylinder 9 realisiert werden.

Angetrieben werden kann der in Fig. 3c gezeigte Verdichtungszylinder jeweils durch die Kolben von beiden Verdichtungsseiten über mechanische Kopplung mit jeweils einem hydraulischen Antrieb 9. Es wäre aber auch denkbar, dass der Verdichtungszylinder durch lediglich einen hydraulischen Antrieb 9 angetrieben wird.

Auch bei der in Fig. 3b gezeigten Ausführungsform einer Energieumwandlungseinrichtung 86 kann in ähnlicher Weise wie in Fig. 3c gezeigt, eine Hubverstellung realisiert werden. Hierfür ist in dem Hydraulikzylinder 9 eine befüllbare Kammer 92 zur Hubverstellung vorgesehen. Dabei sind nun die beiden Verdichtungszylinder 7 nicht mehr mechanisch über eine einzige Kolbenstange verbunden, sondern jeder Verdichtungszylinder 7 ist mit einer separaten Kolbenstange mit dem Hydraulikzylinder 9 verbunden. In dem Hydraulikzylinder 9 bilden deren Kolbenflächen zwei Wandungen der befüllbaren Kammer 92 zur Hubverstellung aus.

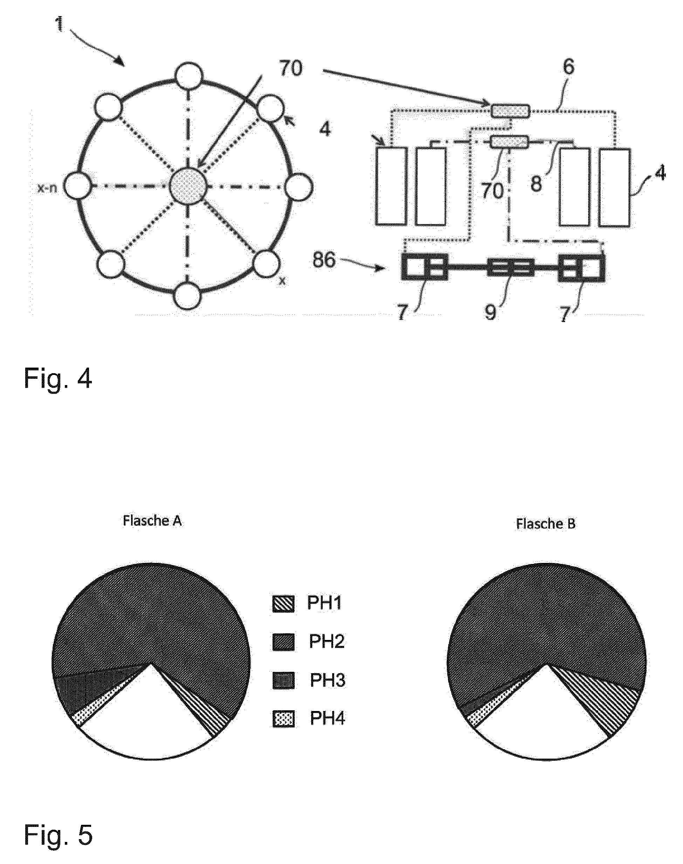

Figur 4 zeigt eine schematische Darstellung einer weiteren bevorzugten Ausführungsform einer erfindungsgemäßen Vorrichtung 1 in Draufsicht sowie in Querschnittsdarstellung. Dabei wird in dem rechten Teilbild die Funktionsweise der erfindungsgemäßen Vorrichtung 1 bzw. einer Ausführungsform hiervon exemplarisch an vier Blasstationen 4 veranschaulicht. Es ist dargestellt, dass die beiden äußeren Blasstationen 4 über die Druckversorgungseinrichtung 6 über eine Verteilungseinrichtung 70 sowohl miteinander als auch einzeln oder beide Blasstationen 4 zusammen mit der Verdichtungskammer des linken Verdichtungszylinders 7 der Energieumwandlungseinrichtung 86 in Fluidverbindung gebracht werden können. Analog können die beiden inneren Blasstationen 4 über die Druckabführeinrichtung 8 über eine weitere Verteilungseinrichtung 70 sowohl miteinander als auch einzeln oder beide zusammen mit der Verdichtungskammer des rechten Verdichtungszylinders 7 der Energieumwandlungseinrichtung 86 in Fluidverbindung gebracht werden.

Ist nun in einer der inneren Blasformen 42 gerade ein Umformungsprozess eines Kunststoffvorformlings 10 zu einem Kunststoffbehältnis mittels eines unter Druck befindlichen pneumatischen Mediums abgeschlossen, so soll nun ein möglichst großer Teil der in diesem pneumatischen Medium befindlichen potentiellen Energie genutzt werden. Dazu ist vorgesehen, diese Energie direkt zur Erzeugung eines Volumens an pneumatischem Medium (aus einem geeigneten Volumen an pneumatischem Medium niedrigeren Drucks wie beispielsweise dem sogenannten Vorblasdruck) unter einem derartigen Druck zu nutzen, der wiederum zur Umformung eines Kunststoffvorformlings 10 zu einem Kunststoffbehältnis 20 geeignet ist. Dies wird durch die Energieumwandlungseinrichtung 86 ausgeführt. Dazu wird die Blasform 42 beispielsweise mit einer Verdichtungskammer (Verdichtungsseite S1) eines Verdichtungszylinders in Fluidverbindung gebracht. Mit Unterstützung einer Vorspannung oder einer anderen Antriebseinrichtung entspannt sich das pneumatische Medium in dieser Verdichtungskammer unter Reduzierung seines Drucks. Gleichzeitig wird der Druck des pneumatischen Mediums in der Verdichtungskammer des zweiten Verdichtungszylinders 7 erhöht. Dabei wird ein anfänglicher Kraftüberschuss zunächst in Form kinetischer Energie zwischengespeichert und dann dem Verdichtungsvorgang wieder zugeführt.

Ebenfalls veranschaulicht ist in Fig. 4, dass auch jeweils zwei Blasstationen 4 bzw. Blasformen 42 fluidtechnisch miteinander gekoppelt sein können. So wird dann in diesen beiden Blasformen 42 gleichzeitig der Druck reduziert und in zwei weiteren Blasformen 42 gleichzeitig der Druck des pneumatischen Mediums erhöht.

Fig. 5 zeigt eine Gegenüberstellung der Prozesswinkel der Behandlungsvorgänge zweier Flaschen bei ihrem Umformprozess ausgehend von einem Vorformling. Dabei repräsentieren jeweils die Kreise einen Zyklus der Vorrichtung 1 zum Umformen von Kunststoffvorformlingen 10 zu Kunststoffbehältnissen 20 (vgl. Fig. 1). Ein typischer Zyklus beginnt dabei jeweils in dem weißen Kreissektor beispielsweise mit dem Einbringen eines Kunststoffvorformlings 10 in eine Blasform 42 einer Blasstation 4. Bevorzugt wird der eigentliche Umformvorgang eines Kunststoffvorformlings 10 mit einer Vorblasphase PH1 begonnen, in der der Kunststoffvorformling 10 mit pneumatischem Medium niedrigen Drucks, dem sogenannten Vorblasdruck, beaufschlagt wird. Daran schließt sich bevorzugt eine Hochdruckphase PH2 an, in der die Kunststoffvorformlinge 10 mittels Beaufschlagung durch unter (hohem) Druck befindlichen pneumatischen Mediums zu Kunststoffbehältnissen 20 aufgeblasen werden. An diese Phase schließt sich bevorzugt eine Niederdruckphase PH3 an, in der bevorzugt wenigstens ein Teil des pneumatischen Mediums abgeführt und besonders bevorzugt wiederverwertet wird. Beispielsweise kann eine derartige Druckreduktion in einer Blasform, die sich in einer solchen Phase befindet, übergeführt werden in eine Druckerhöhung des pneumatischen Mediums einer weiteren Blasform, wie obig beschrieben. Bevorzugt folgt sodann eine Entlastungsphase PH4, in der der restliche in der Blasform 4 bzw. in dem fertig aufgeblasenen Kunststoffbehältnis 20 vorherschende Druck entlastet wird.

Bevorzugt nimmt die Hochdruckphase stets einen festen Prozesswinkel, d.h. denselben Zeitraum, in Anspruch. Dies ist in Fig. 5 durch gleich große Sektoren der Hochdruckphase der Flasche A und B veranschaulicht. Dies kann notwendig sein, um die Qualitätsanfordernisse an die Ausformung des Kunststoffbehältnisses 20 gewährleisten zu können. Hierfür ist es bevorzugt wichtig, den Fertigblasdruck möglichst schnell zu erreichen und lange in der Flasche anstehen zu lassen.

Der in Fig. 5 dargestellte Prozessablauf der Flasche B zeigt im Vergleich zur Flasche A eine länger andauernde Vorblasphase PH1. Gründe hierfür könnten möglicherweise ein verschiedenes zu expandierendes Behältnis sein, beispielweise ein Behältnis kleineren oder größeren Volumens. Der weiße Sektor der Kreisdiagramme stellt den sogenannten Totwinkel des Umformprozesses in der Vorrichtung 1 dar. In diesem können an einem Kunststoffvorformling 10 bzw. an einem Kunststoffbehältnis 20 keine Umformungen mehr vorgenommen werden. Dieser Zeitraum repräsentiert beispielsweise, wie bereits erwähnt, das Öffnen und/oder Schließen der Blasform 42 und/oder das Zuführen eines Kunststoffvorformlings 10 in die Vorrichtung 1 und/oder das Abführen des fertig geblasenen Kunststoffbehältnisses 20 aus der Vorrichtung. Auch dieser Zeitraum ist bevorzugt im Wesentlichen fix bezüglich seiner Dauer. Es kann nun bevorzugt sein, dass bei einer früh beginnenden Vorblasphase PH1 die Entlastungsphase PH4 so lange wie möglich hinauszuzögern und damit, wie bei der Flasche A dargestellt, die Niederdruckphase PH3 im Vergleich zur Flasche B zu verlängern.

In einer bevorzugten Ausführungsform ist die Druckreduktion innerhalb einer ersten Blasform 42, welche sich besonders bevorzugt in der Niederdruckphase befindet, mit der Druckreduktion eines pneumatischen Mediums innerhalb einer weiteren Blasform 42, welche sich bevorzugt in der Vorblasphase befindet, zeitgleich gekoppelt. Da bei einem solchen Aufbau durch den Fertigblaszeitpunkt der ersten Blasform 42 auch der Zeitpunkt des Druckabbaus festgelegt ist und dennoch möglichst der volle Prozesswinkel zur Kühlung der Flasche genutzt werden soll, wird die Flasche noch bis zum finalen Entlüften auf niedrigem Druckniveau gehalten.

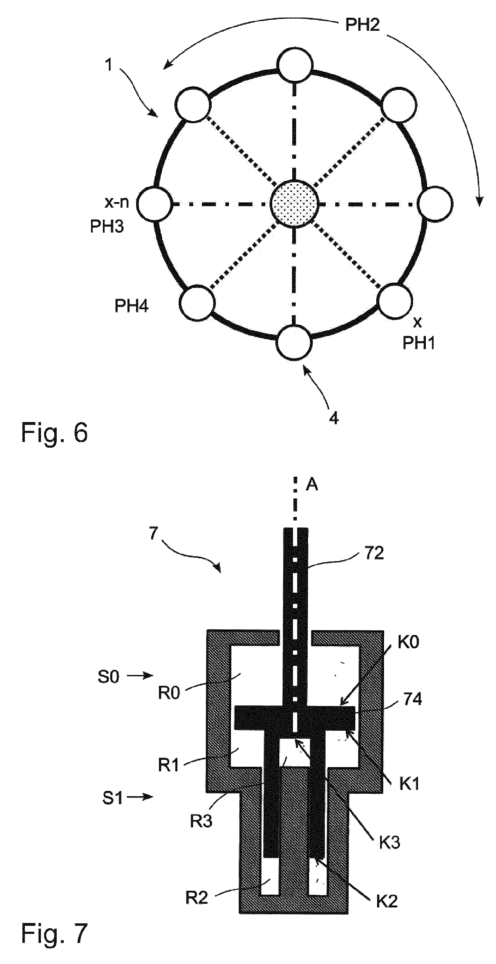

Fig. 6 zeigt eine schematische Darstellung der in Fig. 1 dargestellten Ausführungsform einer erfindungsgemäßen Vorrichtung unter Kennzeichnung der einzelnen Phasen, in der sich die Kunststoffbehältnisse in ihrem Umformungsvorgang befinden. Die mit x gekennzeichnete Blasstation befindet sich noch in der Vorblasphase PH1, d.h. der Kunststoffvorformling 10 wurde bereits mit pneumatischem Medium niedrigen Drucks, dem sogenannten Vorblasdruck, beaufschlagt. Durch Beaufschlagung mit pneumatischem Hochdruckmedium wird der Kunststoffvorformling 10 in der Hochdruckphase PH2 zu einem Kunststoffbehältnis 20 aufgeblasen. Schließlich wird der Drucks des pneumatischen Mediums reduziert, wodurch sich die Blasstation 4 in der Niederdruckphase PH3 befindet (Blasstation 4, Kennzeichnung mit x-n). Abschließend wird der verbleibende Druck abgebaut, was der Entlastungsphase PH4 entspricht.

Die Energieumwandlungseinrichtung 86 kann nun über einen wie in Fig. 4 gezeigten Verteilerstern bzw. über die Druckversorgungseinrichtung 6 an die Blasstation x gekoppelt werden, um dort das Behältnis mit Druck zu beaufschlagen und wieder von der Blasstation x zu entkoppeln und die Energieumwandlungseinrichtung 86 einer Blasstation x-n zuzuordnen um den Druck in dieser wieder abzubauen. Die Zahl n ist dabei die Anzahl der Blasstationen in der Hochdruckphase. In dem in der Fig. 6 gezeigten Beispiel wäre n somit gleich 4. Beschreibt m die Anzahl der Energieumwandlungseinrichtungen 86 der Vorrichtung 1, so wird nun obige Energieumwandlungseinrichtung 86 mit der x+1*m-ten Blasstation 4 verbunden und in dieser Druck aufgebaut und schließlich in der x-n+1*m-ten Blasstation entlastet.

Bei einer alternativen Ausführungsform (beispielsweise Verwendung eines zweiten Verdichtungszylinders 7) kann in den Blasstationen x und x-n gleichzeitig Druck auf- bzw. abgebaut werden.

Fig. 7 zeigt eine schematische Querschnittsdarstellung eines Verdichtungszylinders 7 einer weiteren bevorzugten Ausführungsform einer erfindungsgemäßen Vorrichtung 1. Bei einem derartig ausgestalteten Verdichtungszylinder 7 weist der Kolben eine Kolbenfläche K0 zur Vorspannung auf. Diese befindet sich auf der Vorspannseite S0. Auf der anderen Seite, der Verdichtungsseite S1, ist die Kolbenfläche nicht einteilig sondern in drei Kolbenteilflächen K1 - K3 unterteilt. Hieraus entstehen drei separate Teilkammern R1 - R3, in die sowohl einzeln als auch in Verbindung mit einer oder beiden anderen Teilkammern zur Verdichtung eines pneumatischen Mediums genutzt werden können. Die Teilkammern R1 - R3 können zudem auch einzeln atmosphärisch belüftet werden.

Auch dargestellt ist eine Achse A, welche durch die Kolbenstange und parallel zur Bewegungsrichtung der Kolbenstange eingezeichnet ist. Bezüglich dieser Achse befinden sich zwei Teilkammern R1, R2 und auch die beiden zugehörigen Kolbenteilflächen K1, K2 weiter hiervon beabstandet als die dritte Teilkammer R3 bzw. die dazu zugehörige Kolbenteilfläche K3. K1 und K2 können als kreisringförmige Flächen und K3 kann als eine Kreisfläche ausgebildet sein.

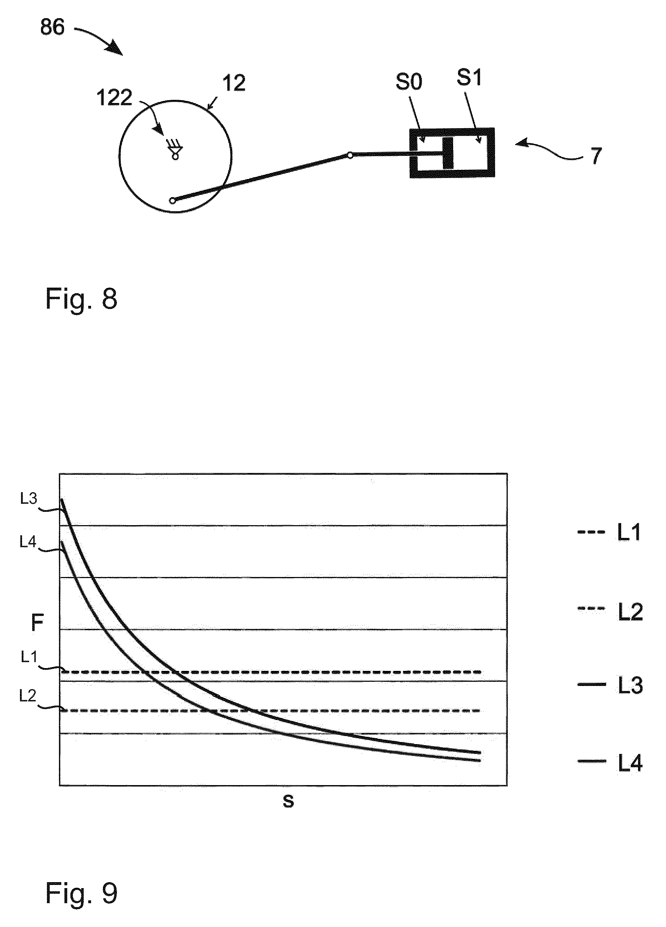

Fig. 8 zeigt eine schematische Querschnittsdarstellung einer weiteren Ausführungsform einer Energieumwandlungseinrichtung 86, die einen mit einem Kurbeltrieb gekoppelten Verdichtungszylinders 7 aufweist. Der Verdichtungszylinder 7 weist eine Kammer zur Verdichtung eines pneumatischen Mediums, die Verdichtungsseite S1, sowie eine Kammer zur Vorspannung, die Vorspannseite S0, auf. Die Vorspannung dient als Energiespeicher für potentielle Energie und kann auch als Antrieb dienen, indem das Druckniveau bei Vor- und Rückhub variiert wird. Die zu Beginn bei einem Verdichtungsvorgang infolge des Kraftüberschusses der Vorspannung freiwerdende Energie soll durch Umwandlung in kinematische Energie zwischengespeichert werden. Da diese Energiemenge enorm groß ist und zugleich die Kolbengeschwindigkeit begrenzt ist, ist eine Kopplung des Kolbens an eine Schwungmasse 12 vorgesehen. Durch die unendliche Übersetzung im Totpunkt kann der Kolben mit nur geringer Kraft in seiner Endlage gehalten werden. Ein Antrieb kann sowohl durch Änderung des Vorspanndruckes als auch pneumatisch oder hydraulisch erfolgen. Ein zusätzlicher elektrischer Antrieb 122 an der Schwungmasse 12 ist zunächst zum Halten der Schwungmasse in den Endlagen des Kolbens vorgesehen, kann aber auch als unterstützender Antrieb oder als Hauptantrieb eingesetzt werden.

Fig. 9 zeigt ein qualitatives Diagramm zur Veranschaulichung der Kolbenkraft in Abhängigkeit von der Kolbenposition bei einer mechanischen Kopplung eines Verdichtungszylinders mit einem Kurbeltrieb. Dabei stellt L1 die Gegenkraft bei einem Vorhub und L2 die Gegenkraft bei einem Rückhub dar. L3 zeigt schließlich die Abhängigkeit der Kolbenkraft bei einem Vorhub ohne Vorspannung und L4 die Kolbenkraft bei einem Rückhub ohne Vorspannung.

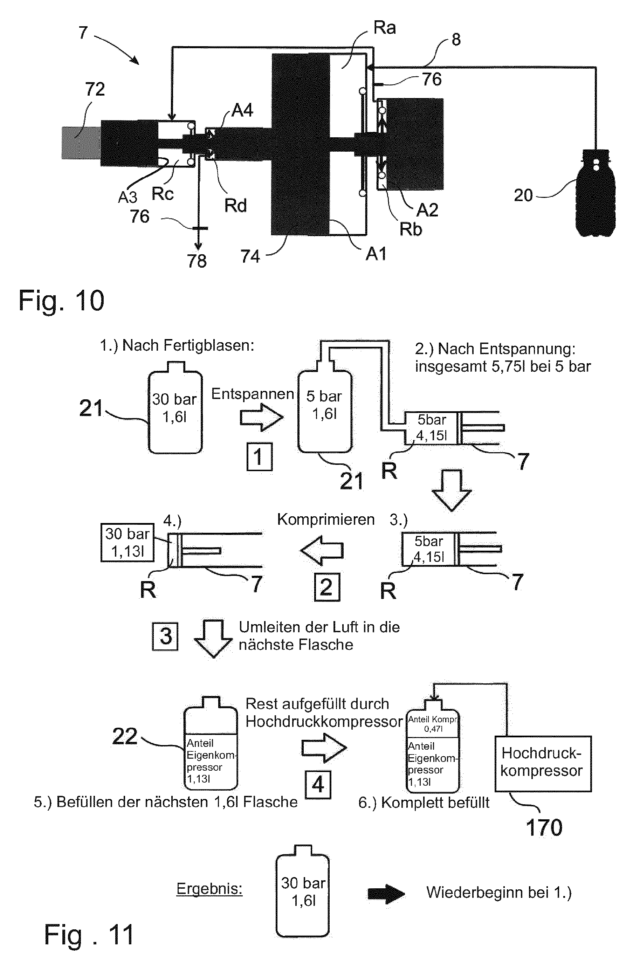

Fig. 10 zeigt eine schematische Querschnittsdarstellung eines Verdichtungszylinders 7. Der gezeigte Verdichtungszylinder 7 weist dabei vier Kammern Ra, Rb, Rc und Rd auf. Die jeweiligen Kolbenflächen A1, A2, A3 und A4 sind dabei alle mechanisch mit der Kolbenstange 72 verbunden, welche über einen Antrieb angetrieben werden kann. Der ersten Kammer Ra kann pneumatisches Medium beispielsweise über eine Druckabführeinrichtung 8, welche aus einem fertig geblasenen Kunststoffbehältnis 20 das zur Expansion verwendete pneumatische Medium abführt, zugeführt werden. Bevorzugt findet eine solche Zufuhr während eines Kolbenrückhubs statt. Bei einem Kolbenrückhub bewegt sich der Kolben in der Figurenebene nach links. Demnach verkleinert sich dann bei einem Kolbenrückhub jeweils das Volumen der zweiten Kammer Rb sowie der vierten Kammer Rd. Gleichzeitig vergrößert sich das Volumen der ersten Kammer Ra und der dritten Kammer Rc. Ebenfalls dargestellt ist eine Fluidverbindung zwischen der ersten Kammer Ra und der zweiten Kammer Rb, eine Fluidverbindung zwischen der zweiten Kammer Rb und der dritten Kammer Rc, welche mit einem Rückschlagventil 76 versehen sein kann, sowie eine Fluidverbindung zwischen der dritten Kammer Rc und der vierten Kammer Rd. Bevorzugt kann an einer Abnahmestelle an der vierten Kammer Rd eine Ausgangsleitung 78 angeordnet sein, über welche in der vierten Kammer Rd befindliches pneumatisches Medium abgeführt werden kann und welche ebenso mit einem Rückschlagventil 78 versehen sein kann.

Außerdem ist in Fig. 10 dargestellt, dass die Kolbenflächen A1 - A4 bevorzugt unterschiedlich große Flächen aufweisen. Gezeigt ist, dass die Kammer Ra die größte Kolbenfläche A1, die Kammer Rb die zweitgrößte Kolbenfläche A2, die Kammer Rc die drittgrößte Kolbenfläche A3 und die Kammer Rd die kleinste Kolbenfläche A4 aufweist.

In einem bevorzugten Verfahren wird in der ersten Kompressionsstufe des Verdichtungszylinders 7 bei einem Kolbenrückhub der ersten Kammer Ra pneumatisches Medium zugeführt und anschließend die Zufuhrverbindung getrennt. Daraufhin wird bevorzugt eine Fluidverbindung zwischen der ersten Kammer Ra und der zweiten Kammer Rb hergestellt. Bei einem Kolbenvorhub (Bewegung des Kolbens in der Figurenebene nach rechts) wird daher bevorzugt das in der ersten Kammer Ra befindliche pneumatische Medium in die zweite Kammer Rb gedrängt und dadurch auf ein Zwischendruckniveau komprimiert. Nach Beendigung des Kolbenvorhubs wird die Fluidverbindung zwischen der ersten Kammer Ra und der zweiten Kammer Rb wieder getrennt.

In der zweiten Kompressionsstufe des Verdichtungszylinders 7 findet wiederum ein Kolbenrückhub und ein daran anschließender Kolbenvorhub statt. Dabei ist während des Kolbenrückhubs eine Fluidverbindung zwischen der zweiten Kammer Rb und der dritten Kammer Rc hergestellt, so dass das in der zweiten Kammer Rb befindliche pneumatische Medium in die dritte Kammer Rc gedrängt wird. Am Ende des Kolbenrückhubs wird die Fluidverbindung zwischen der zweiten Kammer Rb und der dritten Kammer Rc wieder unterbrochen. Bei dem daran anschließenden Kolbenvorhub ist eine Fluidverbindung zwischen der dritten Kammer Rc und der vierten Kammer Rd hergestellt, wodurch die Kolbenfläche A3 der dritten Kammer Rc das darin befindliche pneumatische Medium durch die hergestellte Fluidverbindung in die vierte Kammer Rd strömen lässt. Nach Abschluss des Kolbenvorhubs wird auch diese Fluidverbindung wieder getrennt. Daraufhin kann das nunmehr zum zweiten Mal komprimierte pneumatische Medium, welches sich in der vierten Kammer Rd befindet, beispielsweise über die Ausgangsleitung 78 abgeführt werden.

Die Figuren 11 - 14 stellen Veranschaulichungen verschiedener bevorzugter Ausführungsformen eines Verfahrens zur Wiederverwertung eines zur Umformung verwendeten pneumatischen Mediums dar. Dabei werden in den verschiedenen Ausführungsformen des Verfahrens einzelne Hauptschritte durch in Kästchen platzierte Ziffern gekennzeichnet und analog bzw. gleich ablaufende Verfahrensschritte werden mit derselben Ziffer bezeichnet. Es wird darauf hingewiesen, dass nachfolgende Zahlenbeispiele lediglich beispielhaften Charakters sind und jeweils lediglich eine bevorzugte Anwendung des Verfahrens darstellen.

Fig. 11 veranschaulicht eine bevorzugte Ausführungsform einer ersten Ausführungsform des Verfahrens zur Wiederverwertung eines zur Umformung verwendeten pneumatischen Mediums ohne Mitwirkung eines Zwischendruckreservoirs und mit einem Hochdruckkompressor anhand eines Beispiels.

Dabei werden nach dem Fertigblasen einer Flasche 21 (beispielsweise Kunststoffbehältnis 20) in einem ersten Schritt (Entspannen) 30 bar aus der Flasche auf ein erstes Druckniveau, hier auf 5 bar, entspannt. Eine solche Entspannung wird durch das Herstellen einer Fluidverbindung zwischen der Flasche 21 und einer Kammer R realisiert. Bei der Kammer handelt es sich in der gezeigten Darstellung um die Kammer eines Verdichtungszylinders 7. Bei einem Fassungsvermögen der Flasche 21 von beispielsweise 1,6 l erhält man hierdurch nach der Entspannung insgesamt 5,75 l bei 5 bar. Nach Abschluss der Entspannung wird die Fluidverbindung wieder getrennt. In der Kammer R befinden sich sodann 4.15 I pneumatisches Medium unter einem Druck von 5 bar.

In einem zweiten Schritt (Entspannen) wird das in der Kammer R befindliche pneumatische Medium bis zum Erreichen eines zweiten Druckniveaus, welches hier bei 30 bar liegt, komprimiert. Durch das Komprimieren auf 30 bar reduziert sich das Volumen des pneumatischen Mediums auf 1,13 l.

In einem dritten Schritt (Umleiten) wird das auf das zweite Druckniveau (hier 30 bar) komprimierte Medium (welches sich in der Kammer R befindet) einer weiteren Blasform 42 zugeführt, hier in eine nächste Flasche 22 umgeleitet. Diese nächste Flasche 22 kann auch ein zu expandierender Kunststoffvorformling sein. Der Anteil dieses aus Eigenkompression gewonnenen pneumatischen Hochdruckmediums der nächsten Flasche 22 beträgt damit 1,13 l. Die sogenannte nächste Flasche 22 hat (in ihrem expandierten Zustand) ein Fassungsvermögen von 1.6 l. Somit sind die aus Eigenkompression gewonnenen 1.13 l pneumatisches Medium bei 30 bar nicht ausreichend. Um die dargestellte Flasche 22, das heißt bevorzugt einen Kunststoffvorformling 10, zu ihrer (seiner) Endform (eines Kunstsoffbehältnisses 20) aufzublasen, sind noch weitere 0,47 l pneumatisches Hochdruckmedium nötig.

Dieses zusätzlich benötigte, restliche unter 30 bar befindliche pneumatische Medium wird in einem vierten Schritt durch einen Hochdruckkompressor 170 aufgefüllt. Durch den Anteil des Hochdruckkompressors 170 erhält man insgesamt das für einen Behandlungsvorgang (wie das Expandieren eines Kunststoffvorformlings) erforderliche Volumen (hier von 1,6 l) an pneumatischem Hochdruckmedium (bei 30 bar).

Bevorzugt wurde durch das Zuführen des Volumens an pneumatischem Hochdruckmedium, welches für eine Expansion eines Kunststoffvorformlings 10 zu einem Kunststoffbehältnis 20 ausreichend ist, in einen weiteren Kunststoffvorformling 10 dieser zu einem Kunststoffbehältnis 20 umgeformt bzw. expandiert. Nach diesem Fertigblasen kann nun dieses Verfahren erneut angewandt werden und somit beim ersten Schritt wiederbegonnen werden.

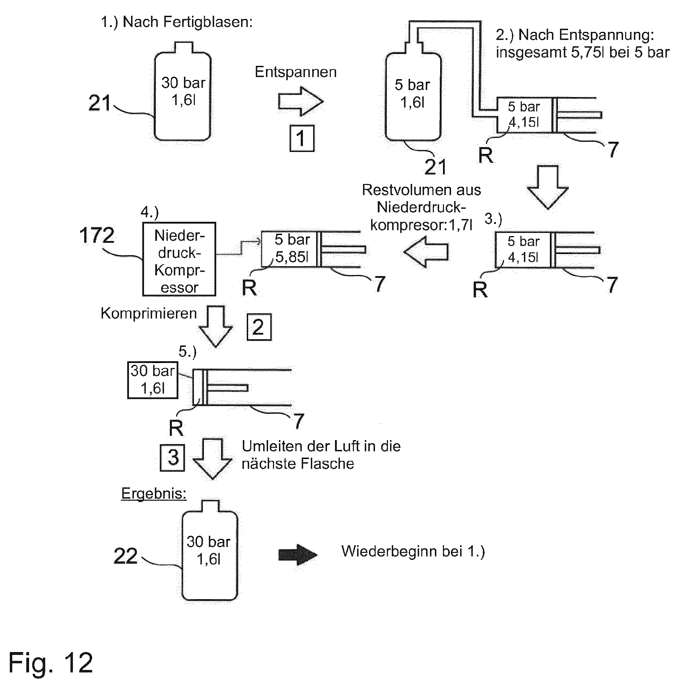

Fig. 12 zeigt eine Veranschaulichung einer bevorzugten Ausgestaltung einer zweiten bevorzugten Variante des Verfahrens zur Wiederverwertung eines zur Umformung verwendeten pneumatischen Mediums ohne Mitwirkung eines Zwischendruckreservoirs und mit einem Niederdruckkompressor. Analog zu der eben beschriebenen ersten Ausführungsform eines Verfahrens werden in einem ersten Schritt (Entspannen) 30 bar aus einer fertig geblasenen Flasche 21 (mit einem Fassungsvermögen von 1,6 l) auf 5 bar durch eine fluidtechnische Verbindung mit einer Kammer R entspannt. Nach Unterbrechung dieser Fluidverbindung werden auch hier 4,15 I eines unter 5 bar befindlichen pneumatischen Mediums in der Kammer R erhalten.

Im Gegensatz zur vorherig beschriebenen Ausführungsform eines Verfahrens wird nun vor dem zweiten Schritt (Komprimieren) der Kammer R zusätzliches pneumatisches Medium zugeführt. Dieses zugeführte pneumatische Medium wird von einem Niederdruckkompressor 172 bereitgestellt und stellt bevorzugt das sogenannte Restvolumen dar. Dieses Restvolumen ist das zusätzlich zu dem rückgewonnenen benötigte pneumatische Medium, so dass nach geeigneter Drucktransformation des Gesamtvolumens (also rückgewonnenes und zusätzlich zugeführtes pneumatisches Medium) mit dem resultierenden pneumatischen Hochdruckmedium ein Kunststoffvorformling 10 zu einem Kunststoffbehältnis 20 aufgeblasen werden kann. In dem hier ausgeführten Beispiel werden 1,7 l pneumatisches Medium bei 5 bar der Kammer R zugeführt, so dass diese anschließend 5,85 l bei 5 bar enthält.

Im Anschluss läuft der zweite Schritt wie in der vorher beschriebenen Ausführungsform des Verfahrens ab. Durch einen Verdichtungszylinder 7 wird das in der Kammer R befindliche pneumatische Medium auf 30 bar verdichtet. Das resultierende Volumen beträgt sodann 1,6 l und entspricht damit genau dem Volumen, welches zur Expansion eines weiteren Kunststoffvorformlings 10 benötigt wird.

In dem dritten Schritt wird nun dieses durch Eigenkompression erzeugte pneumatische Hochdruckmedium aus der Kammer R in eine nächste Flasche 22 (bzw. einen weiteren Kunststoffvorformling 10 bzw. weitere Blasform 42) umgeleitet.

In der hier beschriebenen Ausführungsform des Verfahrens entfällt der vierte Schritt des vorherig beschriebenen Variante des Verfahrens.

Nach dem Fertigblasen kann auch hier erneut wieder mit dem ersten Schritt begonnen werden.

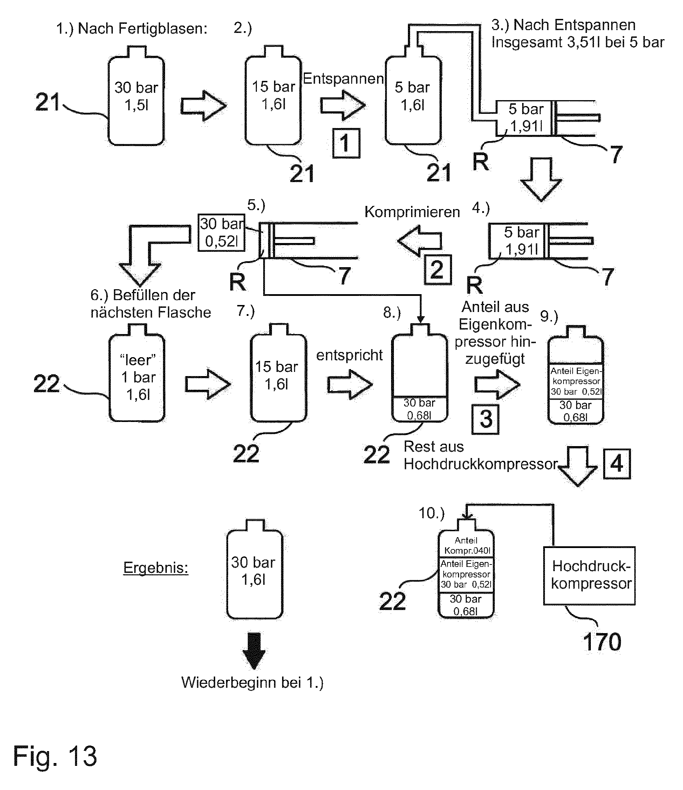

Fig. 13 zeigt eine Veranschaulichung einer bevorzugten dritten Variante des Verfahrens zur Wiederverwertung eines zur Umformung verwendeten pneumatischen Mediums mit Mitwirkung eines Zwischendruckreservoirs und mit einem Hochdruckkompressor. Grundsätzlich laufen wiederum die vier Schritte des zur Fig. 11 beschriebenen ersten Variante des Verfahrens ab.

Ein Unterschied zu dieser Variante des Verfahren ist, dass zuerst die fertiggeblasene Flasche 21 (wiederum 1,6 l Fassungsvermögen) mit einem Zwischendruckreservoir fluidtechnisch verbunden wird, in dem bevorzugt 15 bar herrschen. Dadurch reduziert sich der Druck in der Flasche 21 von anfänglichen 30 bar auf ebenfalls 15 bar.

Anschließend wird ausgehend nun von einer mit 15 bar Druckmedium befüllten Flasche 21 der aus der ersten Ausführungsform des Verfahrens bekannte erste Schritt (Entspannen) vollzogen. Hierzu wird die Flasche mit einer Kammer R fluidtechnisch verbunden und auf 5 bar entspannt. Hierdurch enthält man in der Kammer R ein Volumen von 1,9 l an pneumatischem Medium bei 5 bar.

Im anschließenden zweiten Schritt (Komprimieren) wird dieses in der Kammer R befindliche pneumatische Medium durch einen Verdichtungszylinder 7 auf 30 bar verdichtet. Hierdurch reduziert sich das Volumen des über Eigenkompression rückgewonnenen pneumatischen Hochdruckmediums (bei 30 bar) auf 0,52 l.

In einem dritten Schritt wird nun dieses Volumen an über Eigenkompression rückgewonnenem pneumatischen Hochdruckmedium einer weiteren Flasche 22 zugeführt. Im Unterschied zur ersten Variante des Verfahrens handelt es sich hierbei allerdings nicht um ein "leeres" Behältnis mit einem Innendruck von etwa 1 bar, sondern diese Flasche 22 wurde, beispielsweise von dem Zwischendruckreservoir, bereits mit pneumatischem Medium vorbefüllt. Somit weist die Flasche 22 bereits einen Innendruck von 15 bar auf. Diese Vorbefüllung entspricht einem Volumen von 0.68 l bei einem Druck von 30 bar.

Nach Zufuhr des rückgewonnenen pneumatischen Hochdruckmediums aus der Kammer R wird nun in dem vierten Schritt restliches Volumen bei 30 bar durch einen Hochdruckkompressor 170 zugeführt. Dabei ergänzt der Hochdruckkompressor die der nächsten Flasche 22 zugeführte Stoffmenge an pneumatischem Medium um das Volumen, das beispielsweise zum Aufblasen eines Kunststoffvorformlings 10 zu einem Kunststoffbehältnis 20 benötigt wird.

Insgesamt setzt sich damit das der Flasche 22 zugeführte pneumatische Medium aus drei Anteilen zusammen. Ein Anteil von 0.68 l bei 30 bar ergibt sich aus ihrer Vorbefüllung, ein weiterer Anteil von 0.52 l bei 30 bar ergibt sich aus der durch Eigenkompression rückgewonnenen pneumatischen Hochdruckmediums und ein weiterer ergibt sich aus der Zufuhr des Restvolumens durch den Hochdruckkompressor 170, was insgesamt ein (erforderliches) Volumen an 1,6 l bei 30 bar ergibt.

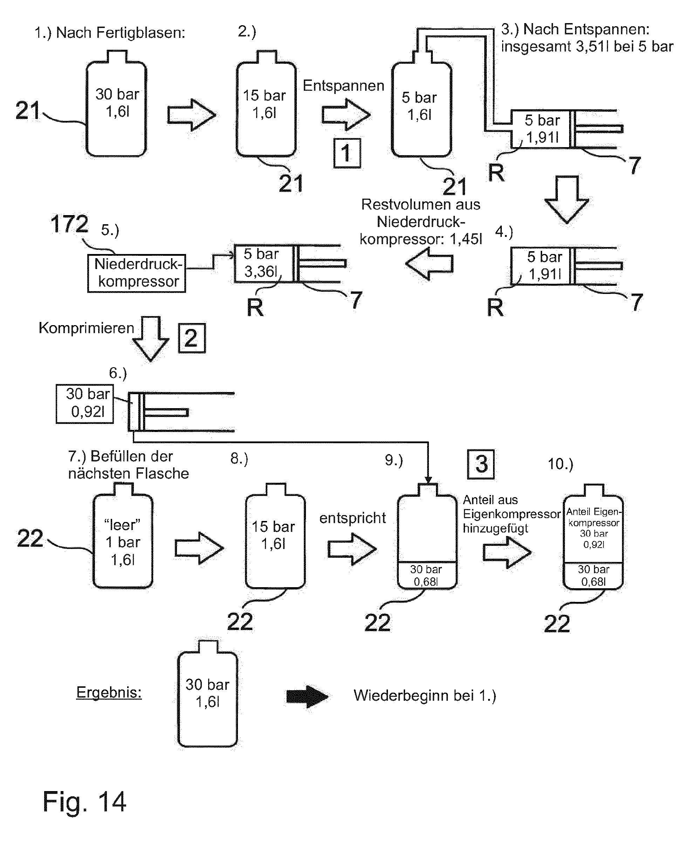

Fig. 14 zeigt eine Veranschaulichung einer bevorzugten vierten Ausführungsform eines Verfahrens zur Wiederverwertung eines zur Umformung verwendeten pneumatischen Mediums mit Mitwirkung eines Zwischendruckreservoirs und mit einem Niederdruckkompressor. Hier wird ebenfalls wie bei der zuvor beschriebenen dritten Ausführungsform des Verfahrens die Flasche 21 zunächst mit einem Zwischendruckreservoir verbunden und dadurch ihr Innendruck von anfänglichen 30 bar auf 15 bar entspannt. Dann erst findet der erste Schritt der Entlastung in eine Kammer R auf 5 bar statt. Wie auch schon in der zur Fig. 12 beschriebenen Ausführungsform des Verfahrens, wird nun noch vor der Kompression in einem dritten Schritt zusätzliches pneumatisches Medium der Kammer R hinzugefügt.

Dieses pneumatische Medium weist einen Druck von 5 bar auf und wird von einem Niederdruckkompressor 172 bereitgestellt. Wie bereits erwähnt wird hierdurch eine entsprechende Volumendifferenz (dem Druck entsprechend angepasst) bereitgestellt, welche nach einer Kompression auf 30 bar zum erforderlichen bzw. gewünschten Volumen an pneumatischem Hochdruckmedium bei 30 bar fehlen würde. In diesem Falle werden hierfür von dem Niederdruckkompressor 172 1,45 l an pneumatischem Medium bei 5 bar bereitgestellt und der Kammer R zugeführt. Sodann erfolgt in dem zweiten Schritt eine Kompression des in der Kammer R befindlichen pneumatischen Mediums auf 30 bar, wodurch dessen Volumen auf 0,92 l reduziert wird. Dieses wird, wie in der vorher beschriebenen Variante des Verfahrens (Fig. 13), in eine bereits vorbefüllte nächste Flasche 22 umgeleitet. Auch hier kann eine derartige Vorbefüllung durch Einspeisung von pneumatischem Medium aus einem Zwischendruckreservoir erfolgt sein. Der Innendruck der in Fig. 14 gezeigten vorbefüllten Flasche 22 beträgt 15 bar. Das Gesamtvolumen an der nächsten Flasche 22 zugeführtem Volumen von pneumatischen Medium (bei 30 bar) setzt sich somit zusammen aus einem Anteil aus der Eigenkompression von 0,92 l (Komprimierung des pneumatischen Mediums in Kammer R) und aus dem pneumatischen Medium der Vorbefüllung der Flasche 22, was bei einem Druck von 30 bar einem Volumen von 0,68 l entspricht.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: Träger
- 4: Blasstation
- 6: Druckversorgungseinrichtung
- 7: Verdichtungszylinder
- 8: Druckabführeinrichtung
- 9: Hydraulikzylinder
- 10: Kunststoffvorformling
- 12: Schwungmasse
- 20: Kunststoffbehältnis
- 21: Flasche
- 22: nächste Flasche
- 42: Blasform
- 66: Energiezwischenspeichereinrichtung
- 70: Verteilungseinrichtung
- 72: Kolbenstange
- 74: Verdichtungskolben
- 76: Rückschlagventil
- 78: Ausgangsleitung
- 86: Energieumwandlungseinrichtung
- 92: befüllbare Kammer zur Hubverstellung
- 94: hydraulischer Antrieb
- 122: Antriebseinrichtung
- 170: Hochdruckkompressor
- 172: Niederdruckkompressor
- A: Achse
- A1 - A4: Kolbenflächen
- F: Kraft
- G1: Graph für Expansionsvorgang
- G2: Graph für Kompressionsvorgang
- K0: Kolbenfläche zur Vorspannung
- K1: Kolbenteilfläche 1
- K2: Kolbenteilfläche 2
- K3: Kolbenteilfläche 3
- L1: Gegenkraft vor
- L2: Gegenkraft rück
- L3: Kolbenkraft vor ohne Vorspannung
- L4: Kolbenkraft rück ohne Vorspannung
- P1: Pfeil 1
- P2: Pfeil 2
- PH1: Vorblasphase
- PH2: Hochdruckphase
- PH3: Niederdruckphase
- PH4: Entlastungsphase
- R0: (kolbenstangenseitige) Kammer
- R: Kammer
- R1: Teilkammer 1
- R2: Teilkammer 2
- R3: Teilkammer 3
- Ra - Rd: Kammern eines Verdichtungszylinders 7
- s: Kolbenposition
- S0: Vorspannseite (Vorspannkammer)
- S1: Verdichtungsseite (Verdichtungskammer)

## Patentansprüche

1. Vorrichtung (1) zum Umformen von Kunststoffvorformlingen (10) zu Kunststoffbehältnissen (20) mit einer an einem Träger (2) angeordneten Vielzahl an Blasstationen (4) jeweils umfassend eine Blasform (42) zum Expandieren von Kunststoffvorformlingen (10) zu Kunststoffbehältnissen (20) innerhalb dieser Blasform (42) mittels eines unter Druck befindlichen pneumatischen Mediums, das der jeweiligen Blasstation (4) über eine Druckversorgungseinrichtung (6) bereitgestellt wird und das von der jeweiligen Blasstation (42) nach dem Expansionsvorgang über eine Druckabführeinrichtung (8) zumindest teilweise wieder abgeführt wird,
**dadurch gekennzeichnet, dass**
sie eine Energieumwandlungseinrichtung (86) aufweist, mithilfe derer wenigstens ein Teil einer in einem Energiespeicher gespeicherten potentiellen Energie in eine Erhöhung der potentiellen Energie eines wenigstens einer Blasform zugeordneten pneumatischen Mediums überführbar ist,
wobei die Energieumwandlungseinrichtung (86) eine Energiezwischenspeichereinrichtung (66) aufweist und wenigstens ein Teil der aus dem Energiespeicher abgeführten potentiellen Energie und der von der Energieumwandlungseinrichtung (86) übertragenen Energie in der Energiezwischenspeichereinrichtung (66) in Form kinetischer Energie speicherbar ist.

2. Vorrichtung (1) gemäß Anspruch 1,
**dadurch gekennzeichnet, dass**
die Energieumwandlungseinrichtung (86) dazu geeignet und bestimmt ist, wenigstens einen Teil der in dem Energiespeicher gespeicherten potentiellen Energie abzuführen und zumindest zeitweise einen Anteil dieser abgeführten Energie in der Energiezwischenspeichereinrichtung (66) in Form kinetischer Energie zu speichern und zeitgleich dazu einen weiteren Anteil der abgeführten Energie überzuführen in eine Erhöhung der potentiellen Energie des wenigstens einer Blasform zugeordneten pneumatischen Mediums.

3. Vorrichtung (1) gemäß wenigstens einem der vorhergehenden Ansprüche,
**dadurch gekennzeichnet, dass**
in der Energieumwandlungseinrichtung (86) Mittel zur Vorspannung eines Kolbens eines Verdichtungszylinders (7) als Energiespeicher für potentielle Energie vorgesehen sind.

4. Vorrichtung (1) gemäß wenigstens einem der vorhergehenden Ansprüche,
**dadurch gekennzeichnet, dass**
das innerhalb einer Blasstation (42) in einem Expansionsvorgang verwendete und wenigstens teilweise einer Druckkammer (S1) eines Verdichtungszylinders (7) zugeführte pneumatische Medium in der Energieumwandlungseinrichtung (86) als Energiespeicher an potentieller Energie verwendbar ist.

5. Vorrichtung (1) gemäß wenigstens einem der vorhergehenden Ansprüche,
**dadurch gekennzeichnet, dass**
die Energiezwischenspeichereinrichtung (66) als kinematisches Zwischenspeichermittel eine schwenkbare bzw. eine drehbare Masse aufweist, wobei das kinematische Zwischenspeichermittel bevorzugt ein Schwungrad ist.

6. Vorrichtung (1) gemäß wenigstens einem der vorhergehenden Ansprüche,
**dadurch gekennzeichnet, dass**
in der Energiezwischenspeichereinrichtung (66) wenigstens eine Energiemenge von 1 kJ der aus dem Energiespeicher abgeführten und der von der Energieumwandlungseinrichtung (86) übertragenen Energie zwischenspeicherbar ist.

7. Vorrichtung (1) gemäß wenigstens einem der vorhergehenden Ansprüche,
**dadurch gekennzeichnet, dass**
durch die Energieumwandlungseinrichtung (86) eine Reduzierung des Drucks des pneumatischen Mediums innerhalb einer ersten Blasform (24) mit der Erhöhung des Drucks des pneumatischen Mediums in einer weiteren Blasform (42) koppelbar ist.

8. Vorrichtung (1) gemäß wenigstens einem der vorhergehenden Ansprüche,
**dadurch gekennzeichnet, dass**
die Energieumwandlungseinrichtung (86) auf dem stationären Teil der Vorrichtung angeordnet ist.

9. Vorrichtung (1) gemäß wenigstens einem der vorhergehenden Ansprüche,
**dadurch gekennzeichnet, dass**
sie eine Antriebseinrichtung (122; 9) zum Antreiben der Energieumwandlungseinrichtung (86) aufweist.

10. Vorrichtung (1) gemäß wenigstens einem der vorhergehenden Ansprüche,
**dadurch gekennzeichnet, dass**
die Totraumvolumina aller Blasstationen (4) gleich groß sind.

11. Vorrichtung (1) gemäß wenigstens einem der vorhergehenden Ansprüche,
**dadurch gekennzeichnet, dass**
an wenigstens einer Blasstation (4) und bevorzugt an allen Blasstationen (4) zusätzliches Totraumvolumen zuschaltbar und/oder der Hub von wenigstens einem Verdichtungszylinder (7) änderbar und/oder der Vorblasdruck in wenigstens einer Blasstation (4) unabhängig einstellbar und/oder die Vorspannkraft in wenigstens einem Verdichtungszylinder (7) variabel ist.

12. Vorrichtung (1) gemäß wenigstens einem der vorhergehenden Ansprüche,
**dadurch gekennzeichnet, dass**
die Energieumwandlungseinrichtung (86) mindestens einen Verdichtungszylinder (7) aufweist und eine Verdichtungskolbenfläche des mindestens einen Verdichtungszylinders (7) auf wenigstens einer Seite eine in ihrer Flächengröße veränderbare Wirkfläche aufweist, wobei bevorzugt die Verdichtungskolbenfläche des Verdichtungskolbens (74) des mindestens einen Verdichtungszylinders (7) wenigstens eine beaufschlagbare Ringfläche (K1;K2) und/oder wenigstens eine beaufschlagbare Kreisfläche (K3) aufweist.

13. Vorrichtung (1) gemäß wenigstens einem der vorhergehenden Ansprüche,
**dadurch gekennzeichnet, dass**
die Energieumwandlungseinrichtung (86) zwei gekoppelte Verdichtungszylinder (7) aufweist und dazu fähig und geeignet ist, mehrere Blasstationen (4) der Vorrichtung (1) mit unter Druck befindlichem pneumatischen Medium zu versorgen, wobei bevorzugt die Verdichtungszylinder (7) schwingungsfrei zur Vorrichtung (1) bzw. zum Träger (2) gekoppelt sind.

14. Vorrichtung (1) gemäß wenigstens einem der vorhergehenden Ansprüche,
**dadurch gekennzeichnet, dass**
die Vorrichtung eine Steuerungseinrichtung aufweist, die dazu geeignet ist, eine erste Blasform, innerhalb welcher der Druck eines pneumatischen Mediums zu reduzieren ist, mit einer Energieumwandlungseinrichtung (86) fluidtechnisch zu verbinden und wobei die Steuerungseinrichtung zudem dazu geeignet ist, zeitgleich oder im Anschluss an eine fluidtechnische Verbindung der Energieumwandlungseinrichtung (86) mit besagter ersten Blasform die Energieumwandlungseinrichtung (86) fluidtechnisch mit einer weiteren Blasform zu verbinden, innerhalb derer der Druck eines pneumatischen Mediums zu erhöhen ist bzw. erhöht werden soll.

15. Verfahren zum Expandieren von Kunststoffvorformlingen (10) zu Kunststoffbehältnissen (20) innerhalb einer Blasform (42) einer Blasstation (4) mittels eines unter Druck befindlichen pneumatischen Mediums, wobei ein Kunststoffvorformling (10) innerhalb wenigstens einer ersten Blasform (42) einer Blasstation (4) mit unter Druck befindlichem pneumatischen Medium beaufschlagt wird, welches über eine Druckversorgungseinrichtung (6) bereitgestellt wird, und zu einem Kunststoffbehältnis (20) expandiert wird, und nach dem Expansionsvorgang über eine Druckabführeinrichtung (8) zumindest teilweise das pneumatische Medium von der Blasform (42) abgeführt wird, **dadurch gekennzeichnet, dass**
wenigstens ein Teil einer in einem Energiespeicher gespeicherten potentiellen Energie aus diesem abgeführt wird und von einer Energieumwandlungseinrichtung (86) in eine Erhöhung der potentiellen Energie eines wenigstens einer weiteren Blasstation (4) zugeordneten pneumatischen Mediums übergeführt wird, wobei wenigstens ein Teil der von der Energieumwandlungseinrichtung (86) übertragenen Energie in einer Energiezwischenspeichereinrichtung (66) in Form kinetischer Energie zwischengespeichert wird und wobei mit dem resultierenden pneumatischen Medium mit erhöhter potentieller Energie wenigstens ein in einer Blasform (42) der weiteren Blasstation (4) befindlicher Kunststoffvorformling (10) zu einem Kunststoffbehältnis (20) expandiert wird.
